(19) Europäisches Patentamt
European Patent Office
Office européen des brevets

(11) **EP 4 586 725 A1**

(12) **EUROPEAN PATENT APPLICATION**
published in accordance with Art. 153(4) EPC

(43) Date of publication:
**16.07.2025 Bulletin 2025/29**

(21) Application number: **23936868.1**

(22) Date of filing: **12.05.2023**

(51) International Patent Classification (IPC):
***H04W 72/25*** (2023.01)

(52) Cooperative Patent Classification (CPC):
**H04W 72/25**

(86) International application number:
**PCT/CN2023/094031**

(87) International publication number:
**WO 2024/234175 (21.11.2024 Gazette 2024/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **MA, Teng**
  **Dongguan, Guangdong 523860 (CN)**
• **ZHANG, Shichang**
  **Dongguan, Guangdong 523860 (CN)**
• **WANG, Hao**
  **Dongguan, Guangdong 523860 (CN)**

(74) Representative: **Mewburn Ellis LLP
Aurora Building
Counterslip
Bristol BS1 6BX (GB)**

(54) **CONTROL INFORMATION TRANSMISSION METHOD AND APPARATUS, DEVICE, AND STORAGE MEDIUM**

(57)  A method and apparatus for control information transmission, device and storage medium, belongs to the field of mobile communication technology. The method is performed by a terminal device, which includes: receiving control information (1501), the control information is for indicating or scheduling transmission of sidelink information on sidelink; the sidelink information includes positioning reference signal.

1501

receive control information, the control information is for indicating or scheduling transmission of sidelink information on sidelink, and the sidelink information includes a positioning reference signal

FIG. 15

EP 4 586 725 A1

**Description**

TECHNICAL FIELD

The present application relates to the field of mobile communication technology, and more particularly to a method and apparatus for control information transmission, a device, and storage medium.

BACKGROUND

With the continuous development of mobile communication technology, the demand for positioning based on mobile communication is also increasing. Among these, positioning based on sidelink (SL) is one of the currently studied positioning enhancement solutions.

Positioning based on sidelink refers to the process where two or more terminals receive and detect signals via the sidelink to achieve applications such as absolute positioning, relative positioning, ranging, and direction finding.

SUMMARY

Embodiments of the disclosure provides a method and apparatus for control information transmission, a device, and storage medium. The technical solutions are as follows.

In an aspect, embodiments of the disclosure provide a method for control information transmission, which is executed by a terminal device and includes: receiving control information, where the control information is for indicating or scheduling transmission of sidelink information on a sidelink, and the sidelink information includes a positioning reference signal.

In an aspect, embodiments of the disclosure provide a method for control information transmission, which is executed by a network device and includes: transmitting control information, where the control information is for indicating or scheduling transmission of sidelink information on a sidelink by a terminal device, and the sidelink information includes a positioning reference signal 。

In an aspect, embodiments of the disclosure provide an apparatus for control information transmission, which includes: a receiving module configured to receive control information, wherein the control information is for indicating or scheduling transmission of sidelink information on a sidelink, and the sidelink information comprises a positioning reference signal.

In an aspect, embodiments of the disclosure provide an apparatus for control information transmission, which includes: a transmitting module configured to transmit control information, wherein the control information is for indicating or scheduling transmission of sidelink information on a sidelink by a terminal device, and the sidelink information comprises a positioning reference signal.

In an aspect, embodiments of the disclosure provide a terminal device, which includes a processor, a memory, and a transceiver. The memory stores computer programs which, when executed by the processor, are operable with the terminal device to implement the method for control information transmission.

In an aspect, embodiments of the disclosure provide a network device, which includes a processor, a memory, and a transceiver. The memory stores computer programs which, when executed by the processor, are operable with the network device to implement the method for control information transmission.

In an aspect, embodiments of the disclosure also provide a computer-readable storage medium, in which a computer program is stored. The computer program is loaded and executed by a processor to implement the above-mentioned method for control information transmission.

In an aspect, embodiments of the disclosure also provide a chip, which is used to operate in a communication device, so as to cause the communication device to execute the above-mentioned method for control information transmission.

In an aspect, embodiments of the disclosure provide a computer program product, which includes computer instructions. The computer instructions are stored in a computer-readable storage medium. A processor of a communication device reads the computer instructions from the computer-readable storage medium and executes the computer instructions, thereby enabling the communication device to execute the above-mentioned method for control information transmission.

In an aspect, embodiments of the disclosure provide a computer program, which is executed by a processor of a communication device to implement the above-mentioned method for control information transmission.

Embodiments of the disclosure provide a resource allocation scheme. The terminal device can receive control information for indicating or scheduling the transmission of sidelink information on the sidelink. Moreover, the sidelink information includes at least a positioning reference signal. That is to say, the transmission of the positioning reference signal by the terminal device on the sidelink is controlled by the control information. This enhances the controllability of the terminal device in performing sidelink-based positioning, thereby improving the flexibility of sidelink-based positioning.

BRIEF DESCRIPTION OF THE DRAWINGS

To more clearly illustrate the technical solutions in the embodiments of the disclosure, the following provides a brief introduction to the drawings used in the description of the embodiments. It is obvious that the drawings described below are merely some embodiments of the disclosure. For those of ordinary skill in the art, other drawings can be obtained based on these drawings without making any inventive effort.

Figure 1 is a schematic architecture diagram of a communication system according to an embodiment of the disclosure.
Figures 2 to 5 are diagrams of a network coverage related to the disclosure.
Figures 6 to 8 are diagrams of a transmission method related to the disclosure.
Figure 9 is a diagram of slot structure in new radio vehicle-to-everything (NR-V2X) related to the disclosure.
Figure 10 is a diagram showing the variation of available orthogonal frequency division multiplex (OFDM) symbols related to the disclosure.
Figure 11 is a diagram of sidelink control information (SCI) mapping related to the disclosure.
Figure 12 is a diagram showing the time-frequency domain position of physical sidelink control channel demodulation reference signal (PSCCH DMRS) related to the disclosure.
Figure 13 is a diagram of time-domain position related to the disclosure.
Figure 14 is a diagram of single-symbol DMRS frequency-domain type 1 related to the disclosure.
Figure 15 is a flowchart of a method for control information transmission according to an embodiment of the disclosure.
Figure 16 is a flowchart of a method for control information transmission according to an embodiment of the disclosure.
Figure 17 is a flowchart of a method for control information transmission according to an embodiment of the disclosure.
Figure 18 is a flowchart of a method for control information transmission according to an embodiment of the disclosure.
Figure 19 is a block diagram of an apparatus for control information transmission according to an embodiment of the disclosure.
Figure 20 is a block diagram of an apparatus for control information transmission according to an embodiment of the disclosure.
Figure 21 is a structural diagram of a communication device according to an embodiment of the disclosure.

DETAILED DESCRIPTION

To make the objectives, technical solutions, and advantages of the disclosure clearer, the following is a detailed description of the embodiments of the disclosure in conjunction with the accompanying drawings.
The network architecture and application scenarios described in the embodiments of the disclosure are intended to more clearly illustrate the technical solutions of the embodiments, and do not limit the technical solutions provided by the embodiments of the disclosure. Those of ordinary skill in the art will understand that with the evolution of network architecture and the emergence of new application scenarios, the technical solutions provided by the embodiments of the disclosure are equally applicable to similar technical problems.

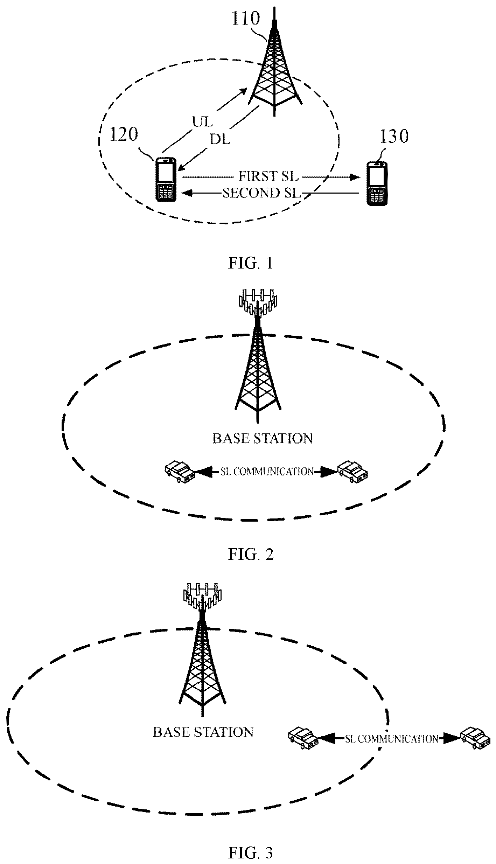

Figure 1 illustrates a schematic diagram of a communication system involved in the exemplary embodiments of the disclosure. The communication system includes a network device 110 and terminal device 120, and/or terminal device 120 and terminal device130, without limitation.
The network device 110 in the disclosure provides wireless communication functions. The network device 110 includes, but is not limited to: an evolved Node B (eNB), a radio network controller (RNC), a Node B (NB), a base station controller (BSC), a base transceiver station (BTS), a home base station (e.g., Home eNB or Home NB, HNB), a baseband unit (BBU), an access point (AP) in a wireless fidelity (Wi-Fi) system, a wireless relay node, a wireless backhaul node, a transmission point (TP), or a transmission and reception point (TRP). It can also be a next generation Node B (gNB) or a TP/TRP in a 5th generation (5G) mobile communication system, or an antenna panel or a set of antenna panels (including multiple antenna panels) of a base station in a 5G system, or a network node constituting a gNB or TP, such as a baseband unit (BBU) or a distributed unit (DU). It can also be a base station in a beyond 5G (B5G) or 6th generation (6G) mobile communication system, or the core network (CN), fronthaul, backhaul, radio access network (RAN), network slicing, or serving cell, primary cell (PCell), primary secondary cell (PSCell), special cell (SpCell), secondary cell (SCell), or neighboring cell of the terminal device.
The terminal devices 120 and/or 130 in the disclosure, also referred to as user equipment (UE), access terminals, user units, user stations, mobile stations, mobile terminals, remote stations, remote terminals, mobile devices, user terminals, terminals, wireless communication devices, user agents, or user devices, include but are not limited to: handheld devices, wearable devices, vehicular devices, and internet of things (IoT) devices, such as mobile phones, tablet computers, e-book readers, laptop computers, desktop computers, televisions, gaming consoles, mobile internet devices (MIDs), augmented reality (AR) terminals, virtual reality (VR) terminals, mixed reality (MR) terminals, wearable devices, joysticks, electronic tags, controllers, wireless terminals in industrial control, wireless terminals in self-driving, wireless terminals in remote medical, wireless terminals in smart grids, wireless terminals in transportation safety, wireless terminals in smart cities, wireless terminals in smart homes, wireless terminals in remote medical surgery, cellular phones, cordless phones, session initiation protocol (SIP) phones, wireless local loop (WLL) stations, personal digital assistants (PDAs), set top boxes (STBs), and customer premise equipment (CPEs).

The network device 110 communicates with the terminal device 120 through a certain air interface technology, such as an Uu interface.

For example, there are two communication scenarios between the network device 110 and the terminal device 120: uplink communication and downlink communication. Uplink communication refers to the transmission of signals to the network device 110, while downlink communication refers to the transmission of signals to the terminal device 120.

The terminal device 120 and terminal device 130 communicate with each other through a certain air interface technology, such as the PC5 interface. In some embodiments, there are two communication scenarios between terminal devices 120 and 130: first sidelink communication and second sidelink communication. First sidelink communication refers to the transmission of signals to terminal device 130, while second sidelink communication refers to the transmission of signals to terminal device 120.

The terminal devices 120 and 130 may both be within the network coverage area and located in the same cell, or the terminal devices 120 and 130 may be in different cells within the network coverage area, or terminal device 120 is within the network coverage area while terminal device 130 is outside the network coverage area.

The technical solutions provided by the embodiments of the disclosure can be applied to various communication systems, such as the global system for mobile communications (GSM), code division multiple access (CDMA), wideband code division multiple access (WCDMA), general packet radio service (GPRS), long term evolution (LTE) system, LTE frequency division duplex (FDD) system, LTE time division duplex (TDD) system, advanced long term evolution (LTE-A) system, universal mobile telecommunications system (UMTS), worldwide interoperability for microwave access (WiMAX) communication system, 5G mobile communication system, new radio (NR) system, evolved NR system, LTE-based access to unlicensed spectrum (LTE-U) system, NR-based access to unlicensed spectrum (NR-U) system, terrestrial network (TN) system, non-terrestrial network (NTN) system, wireless local area networks (WLAN), wireless fidelity (Wi-Fi), cellular IoT systems, and cellular passive IoT systems. They can also be applied to subsequent evolution systems of 5G NR, as well as B5G, 6G, and subsequent evolution systems. In some embodiments of the disclosure, "NR" can also be referred to as the 5G NR system or 5G system. The 5G mobile communication system includes non-standalone (NSA) and/or standalone (SA) networking.

The technical solutions provided in the embodiments of the disclosure can also be applied to machine type communication (MTC), long term evolution-machine (LTE-M), device to device (D2D) networks, machine to machine (M2M) networks, internet of things (IoT) networks, or other networks. For example, the IoT network includes a vehicular network. Communication methods in a vehicular network are collectively referred to as vehicle to X (V2X) communication, where X can represent anything. For example, V2X can include vehicle to vehicle (V2V) communication, vehicle to infrastructure (V2I) communication, vehicle to pedestrian (V2P) communication, or vehicle to network (V2N) communication.

Before introducing the technical solutions of the disclosure, some background technical knowledge involved in the disclosure will be introduced first. The following related technologies can be combined with the technical solutions of the embodiments of the disclosure in any manner, and all of them fall within the scope of protection of the embodiments of the disclosure. The embodiments of the disclosure include at least some of the following contents.

1) Sidelink communication in different network coverage environments

In sidelink communication, based on the network coverage status of the terminals involved in the communication, sidelink communication can be categorized into in-coverage sidelink communication, partial-coverage sidelink communication, and out-of-coverage sidelink communication, as illustrated in the diagrams of network coverage shown in Figures 2 to 5.

Figure 2: In in-coverage sidelink communication, all terminals involved in sidelink communication are within the coverage area of the same base station. Therefore, these terminals can receive configuration signaling from the base station and perform sidelink communication based on the same sidelink configuration.

Figure 3: In partial-coverage sidelink communication, some terminals involved in sidelink communication are within the coverage area of the base station. These terminals can receive configuration signaling from the base station and perform sidelink communication according to the base station's configuration. Terminals located outside the network coverage area cannot receive configuration signaling from the base station. In this case, terminals outside the network coverage area will determine the sidelink configuration based on pre-configuration information and information carried in the sidelink broadcast channel PSBCH sent by terminals within the network coverage area, and then perform sidelink communication.

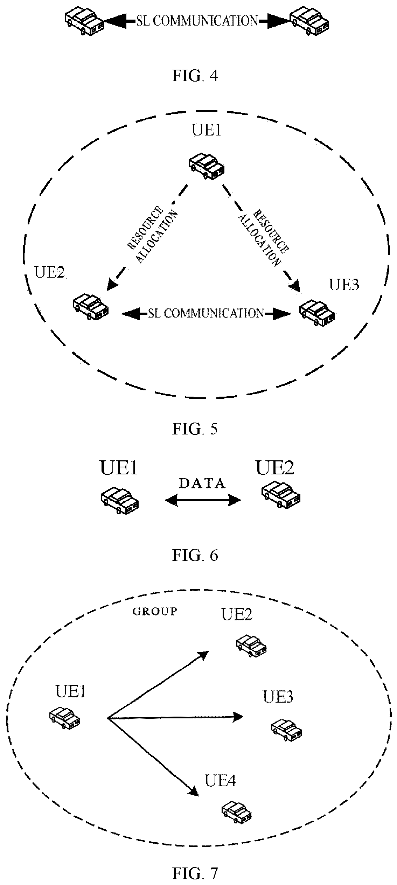

Figure 4: For out-of-coverage sidelink communication, all terminals involved in sidelink communication are outside the network coverage area. All terminals determine the sidelink configuration based on pre-configuration information and perform sidelink communication.

Figure 5: For sidelink communication with a central control node, multiple terminals form a communication group, which includes a central control node that can also be referred to as a cluster header (CH). The central control node has one or more of the following functions:

    responsible for establishing the communication group; managing the joining and leaving of group members; performing resource coordination, allocating sidelink transmission resources for other terminals, and receiving sidelink feedback information from other terminals; and
    coordinating resources with other communication groups.

2) D2D/V2X

Device-to-device (D2D) communication is a sidelink transmission technology based on D2D. Unlike traditional cellular systems where communication data is received or sent through a base station, D2D communication achieves higher spectral efficiency and lower transmission latency. In the context of vehicular networks, direct terminal-to-terminal communication is adopted, and 3GPP has defined two transmission modes: Mode 1 and Mode 2.

Mode 1: The transmission resources for the terminal are allocated by the base station. The terminal sends data over the sidelink based on the resources allocated by the base station. The base station can allocate resources for a single transmission or assign semi-static resources for the terminal. As shown in Figure 2, the terminal is within the network coverage area, and the network allocates transmission resources for sidelink communication to the terminal.

Mode 2: The terminal selects a resource from a resource pool for data transmission. As shown in Figure 4, the terminal is outside the cell coverage area and autonomously selects a transmission resource from a pre-configured resource pool for sidelink transmission. Alternatively, as shown in Figure 2, the terminal autonomously selects a transmission resource from a resource pool configured by the network for sidelink transmission.

3) NR-V2X

In NR-V2X, support for autonomous driving imposes higher requirements on data interaction between vehicles, such as higher throughput, lower latency, higher reliability, greater coverage range, and more flexible resource allocation.

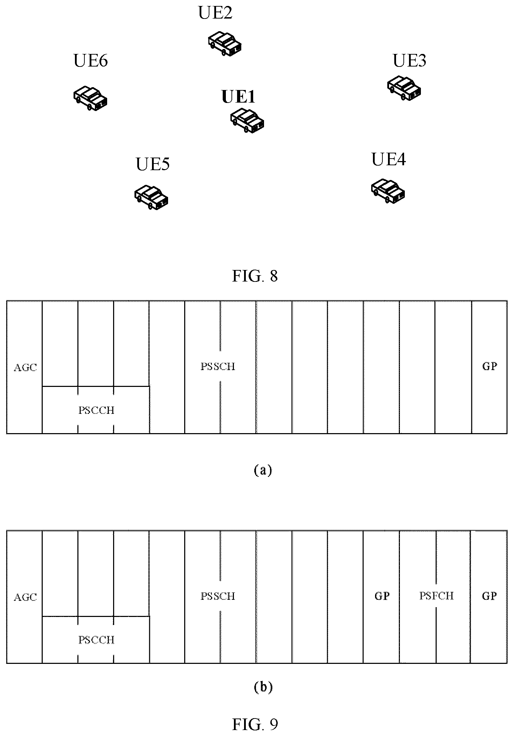

In LTE-V2X, broadcast transmission is supported. In NR-V2X, unicast and multicast transmission modes have been introduced. Please refer to Figures 6 to 8, which illustrate the transmission modes involved herein. For unicast transmission, there is only one receiving terminal. For example, in Figure 6, UE1 and UE2 perform unicast transmission. For multicast transmission, the receivers are all terminals within a communication group or all terminals within a certain transmission range. For example, in Figure 7, UE1, UE2, UE3, and UE4 form a communication group, where UE1 sends data and the other terminals in the group are the receiving terminals. For broadcast transmission, the receivers are any terminals surrounding the transmitting terminal. For example, in Figure 8, UE1 is the transmitting terminal, and the surrounding terminals UE2-UE6 are all receiving terminals.

4) NR-V2X system frame structure

The slot structure in NR-V2X is shown in Figure 9: Figure 9(a) illustrates a slot structure without a physical sidelink feedback channel (PSFCH), while Figure 9(b) illustrates a slot structure with the PSFCH included.

In NR-V2X, the PSCCH starts from the second sidelink symbol of the slot in the time domain and occupies 2 or 3 OFDM symbols. In the frequency domain, it can occupy {10, 12, 15, 20, 25} PRBs. To reduce the complexity of blind detection for the PSCCH by the UE, only one PSCCH symbol number (count) and PRB number (count) is allowed within a resource pool. Additionally, since the subchannel is the smallest granularity for PSSCH resource allocation in NR-V2X, the number of PRBs occupied by the PSCCH must be less than or equal to the number of PRBs in a subchannel within the resource pool. This avoids imposing additional constraints on PSSCH resource selection or allocation. The PSSCH also starts from the second sidelink symbol of the slot in the time domain. The last symbol in the slot is a guard period (GP) symbol, and the remaining symbols are mapped to the PSSCH. The first sidelink symbol in the slot is a repetition of the second sidelink symbol, which is typically used by the receiving terminal for automatic gain control (AGC) and is not used for data demodulation. The PSSCH occupies K subchannels in the frequency domain, with each subchannel including N consecutive physical resource blocks (PRBs), as shown in Figure 9(a).

When the slot includes the PSFCH, the second-to-last and third-to-last symbols in the slot are used for PSFCH transmission, and the symbol immediately preceding the PSFCH in the time domain is used as the GP symbol, as shown in Figure 9(b).

5) Sidelink PSSCH

In NR-V2X, the PSSCH is used to carry second-order SCI (SCI 2-A or SCI 2-B, see details below) and data information. The second-order SCI uses Polar coding and is modulated with quadrature phase shift keying (QPSK) in a fixed manner. The data portion of the PSSCH uses low density parity check (LDPC) coding and supports up to 256 - quadrature amplitude modulation (QAM) as the highest modulation order.

In NR-V2X, the PSSCH supports up to two-stream transmission, and a unitary precoding matrix is used to map data from two layers onto two antenna ports. Only one transport block (TB) can be transmitted on a single PSSCH. However, unlike the transmission of the data portion of the PSSCH, when the PSSCH uses dual-stream transmission, the modulation symbols of the second-order SCI transmitted on the two streams are the same. This design ensures the reception performance of the second-order SCI in highly correlated channels.

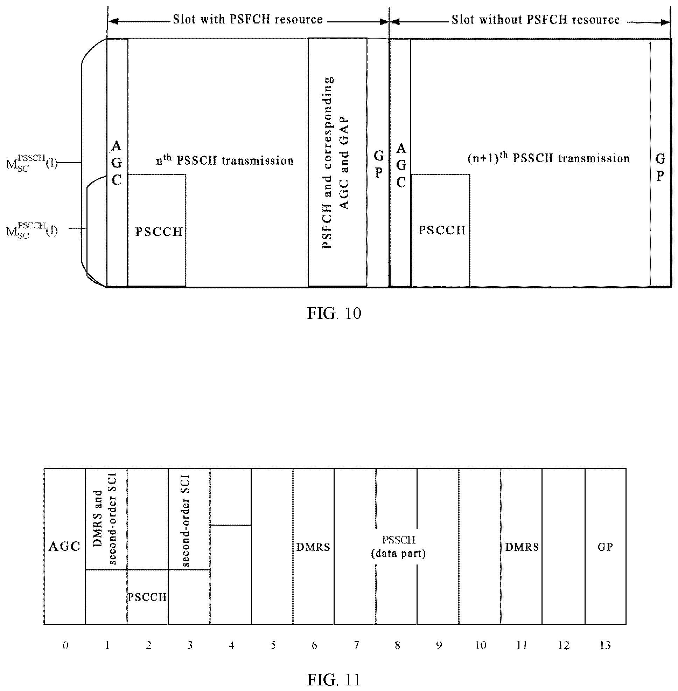

Since the maximum number of retransmissions for a PSSCH in NR-V2X is 32 times, if there are PSFCH resources in the resource pool and the configuration period of the PSFCH resources is 2 or 4, the number of available OFDM symbols in the slots for different transmissions of a PSSCH may vary. The variation of available OFDM symbols in the slots for different transmissions of one PSSCH can be as illustrated in Figure 10. If the actual number of OFDM symbols in a slot is used for calculation of $N_{symbol}^{PSSCH}$, the number of symbols available for PSSCH transmission may vary in a slot, leading to changes in $Q'_{SCI2}$, which further leads to changes in the size of the TB carried by the PSSCH, as described below. To ensure that the TBS remains constant across multiple PSSCH transmissions, the actual number of PSFCH symbols is not used in the calculation of $N_{symbol}^{PSSCH}$. Additionally, the number of REs occupied by the PSSCH DMRS and the number of REs occupied by phase-tracking reference signals (PT-RS), which may change during retransmissions, are not considered in the calculation of $M_{sc}^{SCI2}(l)$.

The code rate of the second-order SCI can be dynamically adjusted within a certain range. The specific code rate used is indicated by the first-order SCI. Therefore, even after the code rate changes, the receiver does not need to perform blind detection on the second-order SCI. The modulation symbols of the second-order SCI are mapped starting from the first PSSCH DMRS symbol, using a frequency-first and then time-domain approach. On the OFDM symbols occupied by the DMRS, the second-order SCI is mapped to the REs not occupied by the DMRS. The diagram of SCI mapping can be shown as in Figure 11.

Within a resource pool, the data portion of the PSSCH can use multiple different modulation and coding scheme (MCS) tables, including the conventional 64QAM MCS table, the 256QAM MCS table, and the low-spectral-efficiency 64QAM MCS table. The specific MCS table used in a single transmission is indicated by the "MCS table indicator" field in the first-order SCI. To control the peak-to-average power ratio (PAPR), the PSSCH must be transmitted using contiguous PRBs. Since the subchannel is the smallest frequency-domain resource granularity for the PSSCH, this requires the PSSCH to occupy contiguous subchannels.

6) Sidelink transmission block size (TBS)

The PSSCH adopts the TBS determination mechanism of the physical downlink shared channel (PDSCH) and physical uplink shared channel (PUSCH) in NR. The TBS is determined based on a reference value of the number of REs used for the PSSCH within the slot where the PSSCH is located, to make the actual code rate as close as possible to the target code rate. The purpose of using a reference value of REs instead of the actual number of REs is to ensure that the number of REs used to determine the TBS remains constant during the retransmission of the PSSCH, thereby ensuring that the determined TBS size remains the same. To achieve this goal, the reference value $N_{RE}$ of the number of REs occupied by the PSSCH in the TBS determination process is determined according to the formula (0-1):

$$N_{RE} = N'_{RE} \cdot n_{PRB} - N_{RE}^{SCI,1} - N_{RE}^{SCI,2} \qquad (0\text{-}1)$$

Where $n_{PRB}$ is the number of PRBs occupied by the PSSCH, $N_{RE}^{SCI,1}$ is the number of REs occupied by the first-order SCI (including REs occupied by PSCCH DMRS), $N_{RE}^{SCI,2}$ is the number of REs occupied by the second-order SCI (as mentioned before), $N'_{RE}$ is the number of reference REs available for PSSCH in a PRB and is determined according to formula (0-2):

$$N'_{RE} = N_{sc}^{RB}\left(N_{symb}^{sh} - N_{symb}^{PSFCH}\right) - N_{oh}^{PRB} - N_{RE}^{DMRS} \qquad (0\text{-}2)$$

Where

$N_{sc}^{RB} = 12$ represents the number of sub-carriers in a PRB;

$N_{symb}^{sh}$ represents the number of symbols available for sidelink in a slot, which does not include the last GP symbol and the first AGC symbol;

$N_{symb}^{PSFCH} = 0/3$, the value of which is indicted by a "number of PSFCH symbol" field in the first-order SCI, and is a reference value of the number of PSFCH symbol;

$N_{oh}^{PRB}$, the value of which is configured by a radio resource control (RRC) layer parameter, and represents the reference value of the number of REs occupied by PT-RS and CSI-RS.

$N_{RE}^{DMRS}$ represent the average number of DMRS REs in a slot, which is related to the allowed DMRS patterns in a resource pool, for example, Table 1 illustrates the correspondence between the DMRS patterns allowed in a resource poll and $N_{RE}^{DMRS}$.

Table 1

| DMRS pattern | $N_{RE}^{DMRS}$ |
|---|---|
| {2} | 12 |
| {3} | 18 |
| {4} | 24 |
| {2,3} | 15 |
| {2,4} | 18 |
| {3,4} | 21 |
| {2,3,4} | 18 |

7) Sidelink DMRS

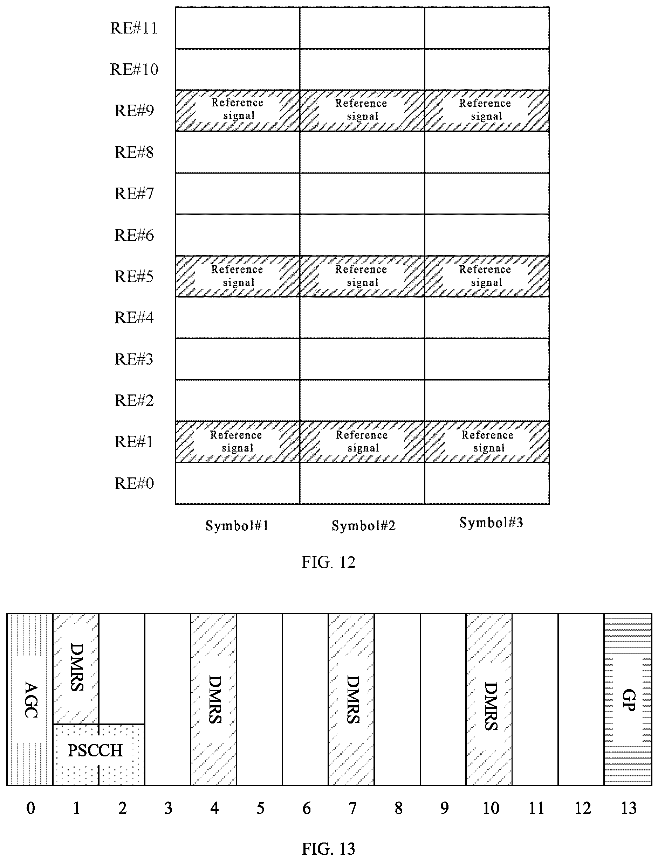

In NR-V2X, the DMRS pattern for the PSCCH is the same as that for NR PDCCH. Specifically, the DMRS exists on every OFDM symbol of the PSCCH and is located at REs numbered {#1, #5, #9} within a PRB in the frequency domain. This is illustrated in the time-frequency domain diagram of the PSCCH DMRS shown in Figure 12. The DMRS sequence for the PSCCH is generated using formula (0-3):

$$r_l(m) = \frac{1}{\sqrt{2}}\left(1 - 2c(m)\right) + j\frac{1}{\sqrt{2}}\left(1 - 2c(m+1)\right) \qquad (0\text{-}3)$$

Pseudo random sequence $c(m)$ is initialized by

$c_{init} = \left(2^{17}\left(N_{symb}^{slot}n_{s,f}^{\mu} + l + 1\right)\left(2N_{ID} + 1\right) + 2N_{ID}\right)\bmod 2^{31}$, where $l$ is an index of a DMRS OFDM symbol in a slot, $n_{s,f}^{\mu}$ is an index of a DMRS slot in a system frame, $N_{symb}^{slot}$ represents the number of OFDM symbols in the slot, $N_{ID} \in \{0,1,\cdots, 65535\}$, the value of $N_{ID}$) in a resource poll is configured by the network or pre-configured.

NR-V2X draws on the design of the NR Uu interface and adopts multiple time-domain PSSCH DMRS patterns.

The number of DMRS patterns available within a resource pool is related to the number of PSSCH symbols in the resource pool. For specific PSSCH symbol numbers (including the first AGC symbol) and PSCCH symbol numbers, the available DMRS patterns and the positions of each DMRS symbol in the patterns are shown in Table 0-2. Figure 13 illustrates the time-domain positions of four DMRS symbols when the number of PSSCH symbols is 13.

| Number of PSSCH symbols (including the first AGC symbol) | Position of DMRS symbols (with respect to the first AGC symbol) | | | | | |
|---|---|---|---|---|---|---|
| | Number of PSCCH symbols is 2 | | | Number of PSCCH symbols is 3 | | |
| | Number of DMRS symbols | | | Number of DMRS symbols | | |
| | 2 | 3 | 4 | 2 | 3 | 4 |
| 6 | 1, 5 | | | 1, 5 | | |
| 7 | 1, 5 | | | 1, 5 | | |
| 8 | 1, 5 | | | 1, 5 | | |
| 9 | 3, 8 | 1, 4, 7 | | 4, 8 | 1, 4, 7 | |
| 10 | 3, 8 | 1, 4, 7 | | 4, 8 | 1,4,7 | |
| 11 | 3, 10 | 1, 5, 9 | 1, 4, 7, 10 | 4, 10 | 1, 5, 9 | 1, 4, 7, 10 |
| 12 | 3, 10 | 1, 5, 9 | 1, 4, 7, 10 | 4, 10 | 1, 5, 9 | 1, 4, 7, 10 |
| 13 | 3, 10 | 1, 6, 11 | 1, 4, 7, 10 | 4, 10 | 1, 6, 11 | 1, 4, 7, 10 |

If multiple time-domain DMRS patterns are configured within a resource pool, the specific time-domain DMRS pattern to be used is selected by the transmitting UE and indicated in the first-order SCI. This design allows high-speed moving UEs to select high-density DMRS patterns to ensure the accuracy of channel estimation, while low-speed moving UEs can use low-density DMRS patterns to improve spectral efficiency.

The generation method of the PSSCH DMRS sequence is almost exactly the same as that of the PSCCH DMRS sequence. The only difference lies in the initialization formula $c_{init}$ of the pseudo-random sequence c(m),

$$N_{ID} = \sum_{i=0}^{L-1} p_i \cdot 2^{L-1-i}$$

. Specifically, $p_i$ is the $n$-$th$ CRC bit of the PSCCH scheduling the PSSCH, and $L=24$ is the number of bits of the PSCCH CRC.

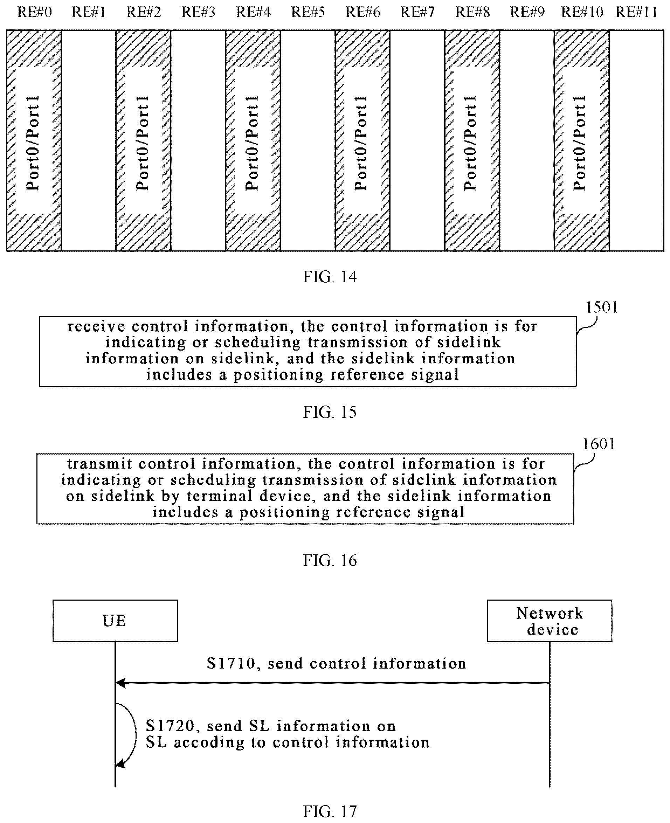

In NR PDSCH and PUSCH, two types of frequency-domain DMRS patterns are supported, namely DMRS frequency-domain Type 1 and DMRS frequency-domain Type 2. For each frequency-domain type, there are two different types of DMRS symbols: single-symbol DMRS and double-symbol DMRS. The single-symbol DMRS frequency-domain Type 1 supports 4 DMRS ports, while the single-symbol DMRS frequency-domain Type 2 can support 6 DMRS ports. In the case of double-symbol DMRS, the number of supported ports is doubled. However, in NR-V2X, since PSSCH needs to support at most 2 DMRS ports, only single-symbol DMRS frequency-domain Type 1 is supported, as shown in Figure 14, which illustrates a single-symbol DMRS frequency-domain Type 1 pattern.

8) Sidelink-based positioning

Sidelink-based positioning is one of the enhancements for R18 positioning technologies. In this topic, scenarios and requirements for NR positioning use cases regarding within cellular coverage, partial coverage, and out-of-coverage areas will be considered. The positioning requirements for V2X use cases, public safety use cases, commercial use cases, and industrial internet of things (IIoT) use cases will be considered. The following functions will also be supported: absolute positioning, ranging/angle measurement, and relative positioning; positioning methods that combine sidelink measurements with Uu interface measurements will be studied; sidelink positioning reference signals will be studied, including signal design, physical layer control signaling, resource allocation, physical layer measurements, and related physical layer procedures; the positioning system architecture and signaling processes will be studied, such as configuration and measurement reporting.

For the above sidelink positioning technologies, there has been no discussion on scheduling or indicating the transmission of positioning reference signals. Additionally, no solutions for positioning technologies based on unlicensed spectrum SL-U have been proposed.

For example, for the sidelink-based positioning technology, there is no specific design for DCI content, nor are there any solutions for positioning technologies based on unlicensed spectrum SL-U. For the network scheduling mode, SL positioning scheme 1, when the base station indicates/schedules through DCI the time-frequency resources (set) for transmitting SL PRS on the sidelink, the format of DCI and the specific information fields/content included in the DCI need to be specified.

If a new DCI format and corresponding information fields are introduced, a completely new design is required. If an existing DCI format is used, some information fields in the current DCI, once indicated, may not have a specific function for scheduling SL PRS. For example, the PUCCH resource indicator and the PSFCH-to-HARQ feedback timing indicator are such fields. This is because the sidelink positioning technology does not introduce a feedback mechanism on the sidelink, and thus cannot feedback on the uplink resources for sidelink transmission.

Please refer to Figure 15, which illustrates a flowchart of a method for control information transmission according to an embodiment of the disclosure. This method is executed by a terminal device, which can be terminal device 120 or terminal device 130 in the network architecture shown in figure 1. The method includes the following steps.

Step 1501: receive control information, which is for indicating or scheduling transmission of sidelink information on a sidelink, the sidelink information includes a positioning reference signal (that is, a reference signal for positioning).

In some embodiments, the control information being for indicating or scheduling the transmission of sidelink information on the sidelink refers to the control information is for indicating or scheduling the sending of sidelink information on the sidelink.

That is, after receiving the control information, the terminal device sends sidelink information containing a positioning reference signal on the sidelink according to the indication/scheduling of the control information.

For example, after receiving the control information, the terminal device sends sidelink control information (SCI) on the sidelink according to the resource for sending sidelink formation and indicated/scheduled by the control information, to indicate the resource for sending sidelink information and indicated/scheduled by the control information to the counterpart device (another terminal device or multiple devices) in sidelink communication. Additionally, the terminal device sends the sidelink information on the resource for sending sidelink formation and indicated/scheduled by the control information.

For instance, after receiving the control information, in a slot where the resource for sending sidelink formation and indicated/scheduled by the control information is located, the terminal device carries information indicating the resource through SCI, and sends the sidelink information on the resource.

Alternatively, for instance, after receiving the control information, in a one or more slots preceding the slot where the resource for sending sidelink formation and indicated/scheduled by the control information is located, the terminal device carries information indicating the resource through SCI, and sends the sidelink information on the resource.

In another example, after receiving the control information, the terminal device sends the sidelink information on the resource for sending sidelink formation and indicated/scheduled by the control information without transmitting SCI, according to the resource for sending sidelink formation and indicated/scheduled by the control information. In this case, the resource for the counterpart device(s) in sidelink communication to receive the sidelink information may be indicated/scheduled by the network device through another control information.

For example, after receiving the control information, the terminal device sends the sidelink information on the resource for sending sidelink formation and indicated/scheduled by the control information without sending information indicating the resource, in the slot where the resource for sending sidelink formation and indicated/scheduled by the control information is located, or in the slot preceding the slot where the resource for sending sidelink formation is located.

In some embodiments, the control information being for indicating or scheduling the transmission of sidelink information on the sidelink refers to the control information being for indicating or scheduling the reception of sidelink information on the sidelink.

That is, after receiving the control information, the terminal device receives, on the sidelink, sidelink information containing a positioning reference signal according to the indication/scheduling of the control information.

For example, after receiving the control information, the terminal device performs blind detection of SCI on the sidelink according to the indication/scheduling of the control information, to obtain the resource where the sidelink information is located, and receive the sidelink information on the resource where the sidelink information is located.

For instance, after receiving the control information, the terminal device initiates blind detection of SCI according to indication of the control information, and receive the sidelink information on the resource indicated by the blind detected SCI.

Alternatively, after receiving the control information, the terminal device performs blind detection of SCI in the slot indicated by the control information and receives the sidelink information on the resource indicated by the blind detected SCI.

In another example, after receiving the control information, the terminal device receives the sidelink information on the resource for receiving sidelink information and indicated/scheduled by the control information without performing blind detection of SCI.

For example, after receiving the control information, the terminal device parses to obtain the resource for receiving sidelink information and receives the sidelink information on the resource thus obtained.

In some embodiments, the control information is transmitted by a network device.

For example, the control information is transmitted by a base station, or by a BBU.

In some embodiments, the control information is send by the network device through a physical downlink control channel (PDCCH).

For example, the control information is DCI sent by the network device through the PDCCH.

In some embodiments, the positioning reference signal refers to a positioning reference signal and used in the sidelink scenario. The positioning reference signal can be a sidelink positioning reference signal (SL PRS).

In some embodiments, the positioning reference signal may also be a positioning reference signal shared between the sidelink scenario and the non-sidelink scenario (e.g., cellular communication scenarios).

In summary, the solution provided in the embodiments of the disclosure allows the terminal device to receive control information for indicating or scheduling the transmission of sidelink information on the sidelink, and the sidelink information at least includes the positioning reference signal. That is, the behavior of the terminal device in transmitting the positioning reference signal on the sidelink can be controlled by the control information, thereby enhancing the controllability of the terminal device's sidelink-based positioning behavior, consequently, improving the flexibility of sidelink-based positioning.

Please refer to Figure 16, which illustrates a flowchart of a method for control information transmission according to an embodiment of the disclosure. This method is executed by a network device, which can be the network device 110 in the network architecture shown in figure 1. The method includes the following steps.

Step 1601: transmit control information, which is for indicating or scheduling transmission of sidelink information on a sidelink by a terminal device. The sidelink information includes a positioning reference signal.

In summary, the solution provided in the embodiments of the disclosure allows the network device to transmit control information for indicating or scheduling the transmission of sidelink information on the sidelink by the terminal device, the control information includes the positioning reference signal. That is, the behavior of the terminal device in transmitting the positioning reference signal on the sidelink can be controlled by the control information, thereby enhancing the controllability of the terminal device's sidelink-based positioning behavior, consequently, improving the flexibility of sidelink-based positioning.

Please refer to Figure 17, which illustrates a flowchart of a method for control information transmission according to an embodiment of the disclosure. This method is interactively executed by a terminal device and a network device. The terminal device can be the terminal device 120 or terminal device 130, and the network device can be network device 110 in the network architecture shown in figure 1. The method includes the following steps.

Step 1710: the network device transmits control information, and correspondingly, the terminal device receives the control information.

The control information is for indicating or scheduling the transmission of sidelink information on a sidelink by the terminal device, the sidelink information includes a positioning reference signal.

In some embodiments, the sidelink information includes: information transmitted on the physical sidelink control channel (PSCCH) and a reference signal; or, information transmitted on a PSCCH, a reference signal, and information transmitted on a physical sidelink shared channel (PSSCH).

In some embodiments, the sidelink information including information transmitted on the PSCCH and the reference signal refers to that indication information for a resource of the reference signal is carried on the PSCCH, and the reference signal is transmitted on the resource indicated by the indication information carried on the PSCCH.

In some embodiments, the sidelink information including the information transmitted on the PSCCH and the reference signal refers to that the PSCCH carries indication information for a resource of the reference signal along with the identification of the counterpart device(s) in sidelink communication that need to receive the reference signal, and the reference signal is to be transmitted on the resource indicated by the indication information carried on the PSCCH.

In some embodiments, the sidelink information including information transmitted on the PSCCH, a reference signal, and information transmitted on the PSSCH refers to that the PSCCH(s) carries first indication information of a resource for the reference signal and second indication information of a resource for the information transmitted on PSSCH; the reference signal is to be transmitted on the resource indicated by the first indication information, and information on the PSSCH is to be transmitted on the resource indicated by the second indication information.

In some embodiments, the sidelink information including information transmitted on the PSCCH, a reference signal, and information transmitted on the PSSCH refers to that the PSCCH(s) carries first indication information of a resource for the reference signal, second indication information of a resource for the information transmitted on PSSCH, and ID of a counterpart device in sidelink communication that needs to receive the reference signal; the reference signal is to be transmitted on the resource indicated by the first indication information, and information on the PSSCH is to be transmitted on the resource indicated by the second indication information.

In some embodiments, the reference signal is SL PRS, or it may be a positioning reference signal shared between a sidelink scenario and a non-sidelink scenario.

In some embodiments, the PSCCH carrying the first indication information and the PSCCH carrying the second indication information may be the same PSCCH; that is, the first and second indication information may be carried by the same PSCCH.

In some embodiments, the PSCCH carrying the first indication information and the PSCCH carrying the second indication information may be different PSCCHs; for example, one PSCCH carries the first indication information, and another PSCCH carries the second indication information.

That is, the sidelink information includes the following.

1) Sidelink positioning reference information, at least including the following: PSCCH: for indicating/scheduling SL-PRS on the sidelink; SL-PRS: positioning reference signal.

2) Sidelink positioning reference information SL-PRS and sidelink shared channel PSSCH, at least including the following: PSCCH: for indicating/scheduling PSSCH and SL-PRS on the sidelink; PSSCH: for carrying sidelink data information; SL-PRS: positioning reference signal.

Optionally, the PSCCH above may be two independent PSCCHs, that is, one PSCCH for indicating/scheduling PSSCH and another PSCCH for indicating/scheduling SL-PRS.

In some embodiments, the control information is DCI in a first format, and the first format is other than DCI format 3_0 and DCI format 3_1; or, the control information is DCI in a second format, and the second format is DCI format 3_0 or DCI format 3_1.

If the control information is DCI, the DCI format of the control information is one or more new DCI formats other than DCI format 3_0 and DCI format 3_1 in the current sidelink control scenario.

In the case of using a new DCI format, the new DCI format can be optimized for the transmission scenario of the positioning reference signal to remove unnecessary information fields, thereby improving the efficiency of control information transmission and the utilization rate of signaling resources.

Or, if the control information is DCI, the DCI format of the control information may reuse the DCI format 3_0 or DCI format 3_1 in the sidelink control scenario.

In the case of reusing the existing DCI format, there is no need to introduce a new DCI for the transmission scenario of the positioning reference signal, thereby simplifying the complexity of DCI transmission and reception in the sidelink communication scenario.

In some embodiments, the cyclic redundancy check (CRC) of the DCI in the first format is scrambled with a positioning-related radio network temporary identifier (RNTI).

In the case where the format of the control information is the first format, the CRC of the control information is scrambled with a positioning-related RNTI.

In the case where the format of the control information is the first format, the control information is scrambled with a positioning-related RNTI. Subsequently, when the terminal device receives the control information, it descrambles the control information with the positioning-related RNTI to verify the accuracy of the control information transmission, thereby enhancing the accuracy of control information transmission.

Or, in the case where the format of the control information is the first format, the CRC of the control information is scrambled with an RNTI unrelated to positioning.

In some embodiments, the positioning-related RNTI includes at least one of the following RNTIs: a first RNTI for dynamic scheduling of a sidelink positioning reference signal; a second RNTI for scheduling of configured grant of a sidelink positioning reference signal; and a third RNTI for scheduling of a sidelink positioning reference signal, PSCCH, and PSSCH.

At least two of the first RNTI, second RNTI, and third RNTI are the same RNTI.

That is, the positioning-related RNTI includes at least one of the following: 1) positioning RNTI (e.g., SL-POS-RNTI) for dynamic scheduling (dynamic grant) of a sidelink positioning reference signal; 2) positioning configured grant RNTI (e.g., SL-POS-CS-RNTI) for scheduling of configured grant of a sidelink positioning reference signal; 3) sidelink RNTI (e.g., SL-POS-RNTI-1) for scheduling of a sidelink positioning reference signal, PSCCH, and PSSCH.

Due to functional multiplexing, any two or all three of the above three RNTIs are combined into one RNTI.

In the above embodiments, by scrambling the control information with an RNTI used for scheduling information including the sidelink positioning reference signal, the terminal device can accurately receive and descramble the DCI for scheduling the sidelink positioning reference signal, thereby enhancing the accuracy of control information transmission.

In some embodiments, when the sidelink information does not include information transmitted on the PSSCH and the control information is DCI in the first format, the DCI in the first format does not include information for indicating the uplink feedback resource. In some embodiments, when the sidelink information includes information transmitted on the PSSCH and the control information is DCI in the first format, the DCI in the first format includes information for indicating the uplink feedback resource.

In the above embodiments, if the sidelink information does not include the information transmitted on the PSSCH (e.g., only the sidelink positioning reference signal is included), there is no need for uplink feedback for the sidelink information, and thus the DCI in the first format may not include information for indicating the uplink feedback resource.

This simplifies the format of the control information and improves the efficiency of control information transmission and parsing.

In the above embodiments, if the sidelink information includes the information transmitted on the PSSCH (e.g., both the sidelink positioning reference signal and PSSCH information are included), there is a need of uplink feedback (e.g., need to feed back to the network whether information on PSSCH is successfully sent) for the sidelink information. In this case, the DCI in the first format may not include information for indicating the uplink feedback resource, allowing the network to understand the transmission status of the PSSCH information and conduct retransmission scheduling and the like, thereby enhancing the accuracy and efficiency of subsequent sidelink information transmission.

In some embodiments, the fact that the DCI in the first format does not include information for indicating the uplink feedback resource means that the DCI in the first format does not have an information field for indicating the uplink feedback resource.

In some embodiments, the fact that the DCI in the first format does not include information for indicating the uplink feedback resource means that the DCI in the first format has an information field for indicating the uplink feedback resource, but the field is empty or its value is NULL.

In some embodiments, the DCI in the second format has an information field for indicating the uplink feedback resource.

In the above embodiments, when the format of the control information is the second format, since the control information reuses the existing sidelink DCI format, it is necessary to include an information field for indicating the uplink feedback resource in the control information. This allows the terminal to accurately parse the information contained in the control information through the existing sidelink DCI format, ensuring the accuracy of control information transmission when the sidelink information indicated/scheduled includes the positioning reference signal.

The DCI in the second format has multiple information fields for indicating the uplink feedback resource.

In some embodiments, the information field for indicating the uplink feedback resource in the DCI in the second format includes information indicating the uplink resource. That is, regardless of whether the sidelink information scheduled by the control information in the second format includes information transmitted on the PSSCH, the DCI in the second format may actually indicate the uplink feedback resource.

In some embodiments, the information field for indicating the uplink feedback resource contained in the DCI in the second format may not include information indicating the uplink resource. For example, when the sidelink information scheduled by the control information in the second format does not include information transmitted on the PSSCH, the information field for indicating the uplink feedback resource in DCI in the second format may be empty or its value may be NULL. Alternatively, when the sidelink information scheduled by the control information in the second format includes information transmitted on the PSSCH, the information field for indicating the uplink feedback resource in the DCI in the second format may actually indicate the uplink feedback resource.

In some embodiments, when the sidelink information does not include information transmitted on the PSSCH, information transmitted on the uplink feedback resource may include at least one of the following: first information indicated by higher layers; second information indicating whether the sidelink information was transmitted; third information determined by the terminal device itself.

The first information indicated by higher layers is designated information transmitted through uplink feedback resource in the case where the higher layers indicates to the terminal device that the sidelink information scheduled by the control information in the second format does not include information on PSSCH but the DCI in the second format actually indicates the uplink feedback resource. For example, the first information is ACK or NACK.

The second information indicating whether the sidelink information was transmitted is information determined by the terminal device based on the transmission status of the sidelink information, in the case where the sidelink information scheduled by the control information in the second format does not include information transmitted on the PSSCH but the DCI in the second format actually indicates the uplink feedback resource.

For example, if the terminal device sent the sidelink information, it sends an ACK on the uplink feedback resource; if the terminal device did not send the sidelink information, it sends a NACK on the uplink feedback resource. Alternatively, if the terminal device sent the sidelink information, it sends a NACK on the uplink feedback resource; if the terminal device did not send the sidelink information, it sends an ACK on the uplink feedback resource.

The third information determined by the terminal device itself is information feedback to the network determined by the terminal device, in the case where the sidelink information scheduled by the control information in the second format does not include information transmitted on the PSSCH, but the DCI in the second format actually indicates the uplink feedback resource. For example, in the case where the sidelink information scheduled by the control information in the second format does not include information transmitted on the PSSCH, but the DCI in the second format actually indicates the uplink feedback resource, the terminal device may decide to send an ACK, NACK, or other values (e.g., 0 or 1) on the uplink feedback resource.

In the above embodiments, when the sidelink information scheduled by the control information in the second format does not include information transmitted on the PSSCH and the DCI in the second format actually indicates the uplink feedback resource, the terminal device may still transmit information on the uplink feedback resource. This supports the reuse of existing DCI formats even when only the sidelink positioning reference signal is scheduled.

In some embodiments, the control information is for indicating the resource or resource set of the reference signal.

In some embodiments, the control information only indicates the resource or resource set of the sidelink positioning reference signal.

For example, when the sidelink information indicated/scheduled by the control information only includes the sidelink positioning reference signal, the control information only indicates the resource or resource set of the sidelink positioning reference signal.

Alternatively, when the sidelink information indicated/scheduled by the control information includes both the sidelink positioning reference signal and information transmitted on the PSSCH, the control information may still only indicate the resource or resource set for the sidelink positioning reference signal. In this case, the resource or resource set for the information transmitted on the PSSCH may be indicated by other information (e.g., another control information).

In some embodiments, the control information indicates the resource or resource set for the sidelink positioning reference signal, as well as information other than the resource or resource set for the sidelink positioning reference signal.

For example, when the sidelink information indicated/scheduled by the control information only includes the sidelink positioning reference signal, the control information indicates the resource or resource set for the sidelink positioning reference signal and the identification of the receiving device of the sidelink information.

Alternatively, when the sidelink information indicated/scheduled by the control information includes both the sidelink positioning reference signal and information transmitted on the PSSCH, the control information indicates the resource or resource set for the sidelink positioning reference signal and the resource or resource set for the information transmitted on the PSSCH.

In the above embodiments, the information field of the control information includes at least one of the following information fields: a first information field for carrying the resource identifier of the reference signal; a second information field for carrying the offset and size of the comb of the reference signal; a third information field for carrying the time-domain resource indication information of the reference signal; a fourth information field for carrying the frequency-domain resource indication information of the reference signal; and a fifth information field for carrying the resource element (RE) offset of the reference signal.

In the embodiments of the disclosure, the resource or resource set for the sidelink positioning reference signal is indicated by one or more of the following: the resource identifier of the sidelink positioning reference signal, the offset and size of the comb, the time-domain resource indication information, the frequency-domain resource indication information, and the RE offset. This ensures the accuracy of scheduling the sidelink positioning reference signal.

The resource identifier of the reference signal in the first information field may be an SL PRS resource ID, that is, resource ID of the sidelink positioning reference signal, or it may be the resource ID of the positioning reference signal shared between sidelink scenarios and non-sidelink scenarios.

The offset and size of the comb in the second information field may be the offset and size of the comb of the sidelink positioning reference signal, or they may be the offset and size of the comb of the positioning reference signal shared between sidelink and non-sidelink scenarios.

The time-domain resource indication information in the third information field may indicate the time-domain resources of the SL PRS, or it may indicate the time-domain resource of the positioning reference signal shared between sidelink and non-sidelink scenarios.

The frequency-domain resource indication information in the fourth information field may indicate the frequency-domain resource of the SL PRS, or it may indicate the frequency-domain resource of the positioning reference signal shared between sidelink and non-sidelink scenarios.

The RE offset in the fifth information field may indicate the offset between multiple REs used for SL PRS transmission, or it may indicate the offset between multiple REs used for transmitting the positioning reference signal shared between sidelink and non-sidelink scenarios.

In some embodiments, the time-domain resource indication information of the reference signal includes at least one of the following: the starting OFDM symbol of the reference signal; the number of OFDM symbols occupied by the reference signal.

In the above embodiments, the time-domain resource indication information of the reference signal indicates the starting OFDM symbol and the number of OFDM symbols occupied by the SL PRS in the time domain, enabling the terminal device to accurately determine the OFDM symbols for SL PRS transmission and ensuring the accuracy of time-domain scheduling of sidelink positioning reference signals.

The starting OFDM symbol and the number of OFDM symbols of the reference signal are indicated in a joint indication manner. That is, the information field $A$, where the time-domain resource indication information of the reference signal is located, has M bits, where the M bits are used to jointly indicate the starting OFDM symbol and the number of OFDM symbols for SL PRS transmission within a slot.

In the joint indication manner, the information field *A* has a start and length indicator (SLIV) value of M bits, which indicates the starting OFDM symbol for SL PRS transmission and the number of OFDM symbols occupied by the SL PRS within a slot.

Alternatively, in the joint indication manner, the information field *A* has two numerical values with a total length of M bits, one of which indicates the starting OFDM symbol within a slot for SL PRS transmission, and the other indicates the number of OFDM symbols occupied by the SL PRS.

The starting OFDM symbol and the number of OFDM symbols of the reference signal are indicated through a bitmap. That is, the information field *A* where the time-domain resource indication information of the reference signal is located contains M bits, where each bit corresponds to one OFDM symbol, and each bit indicates through a numerical value whether the corresponding OFDM symbol is occupied or not.

For example, in the bitmap manner, the information field *A* where the time-domain resource indication information of the reference signal is located has M bits, where each bit corresponds to one OFDM symbol, and each bit indicates with a value of 0 that the corresponding OFDM symbol is not occupied (that is, SL PRS does not occupy the OFDM symbol) and indicates with a value of 1 that the corresponding OFDM symbol is occupied (that is, SL PRS occupies the OFDM symbol).

Alternatively, in the bitmap manner, the information field *A* where the time-domain resource indication information of the reference signal is located has M bits, where each bit corresponds to one OFDM symbol, and each bit indicates with a value of 1 that the corresponding OFDM symbol is not occupied (that is, SL PRS does not occupy the OFDM symbol) and indicates with a value of 0 that the corresponding OFDM symbol is occupied (that is, SL PRS occupies the OFDM symbol).

In some embodiments, the frequency-domain resource indication information of the reference signal includes at least one of the following: the frequency-domain resource for the reference signal; the frequency-domain resource set for the reference signal.

In the above embodiments, the frequency-domain resource indication information of the reference signal indicates the frequency-domain resource or resource set for the sidelink positioning reference signal, ensuring the accuracy of frequency-domain scheduling of the sidelink positioning reference signal.

The frequency-domain resource for the reference signal is indicated in a joint indication manner. That is, the information field *B* where the frequency-domain resource indication information of the reference signal is located has K bits, the K bits indicates the starting subchannel and the number of subchannels of the frequency-domain resource for the reference signal.

In the joint indication manner, the information field *B* has a start and length indicator (SLIV) value of K bits, which indicates the starting subchannel and the number of subchannels.

Alternatively, in the joint indication manner, the information field *B* may have two numerical values with a total length of K bits, one of which indicates the starting subchannel for the frequency-domain resource, and the other indicates the number of subchannels for the frequency-domain resource.

The frequency-domain resource of the reference signal is indicated in a bitmap manner. That is, the information field *B* where the time-domain resource indication information of the reference signal is located has K bits, where each bit corresponds to one subchannel, and each bit indicates through a numerical value whether the corresponding subchannel is occupied or not.

For example, in the bitmap manner, the information field *B* where the frequency-domain resource of the reference signal is located has K bits, where each bit corresponds to one subchannel, and each bit indicates with a value of 0 that the corresponding subchannel is not occupied (that is, SL PRS does not occupy the subchannel), and indicates with a value of 1 that the corresponding subchannel is occupied (that is, SL PRS occupies the subchannel).

Alternatively, in the bitmap manner, the information field *B* where the frequency-domain resource of the reference signal is located has K bits, where each bit corresponds to one subchannel, and each bit indicates with a value of 1 that the corresponding subchannel is not occupied (that is, SL PRS does not occupy the subchannel), and indicates with a value of 0 that the corresponding subchannel is occupied (that is, SL PRS occupies the subchannel).

Step 1720: the terminal device sends sidelink information on the sidelink according to the control information.

In some embodiments, when sending sidelink information, the terminal device sends SCI, which includes at least one of the first information field, second information field, third information field, fourth information field, and fifth information field. Additionally, the terminal device sends other information besides SCI when sending sidelink information, such as SL PRS, or SL PRS and information on the PSSCH.

That is, at least one of the information fields carried in the DCI will be included in the scheduled SCI.

In the above embodiments, when sending sidelink information, the terminal device sends, through SCI, the information field related to SL PRS resource and indicated in the control information to the counterpart device(s) in sidelink communication, and send SL PRS on the SL PRS resource, such that the counterpart device in sidelink communication can perform sidelink positioning accurately.

In some embodiments, the SCI includes at least one of the following: first order SCI carried on PSCCH, and second order SCI carried on PSSCH.

In the above embodiments, when the terminal device sends SCI, the terminal device my carry the SCI on at least one of PSCCH and PSSCH, so as to ensure flexibility of SL PRS resource indication.

That is to say, the SCI includes: first order SCI carried on PSCCH, and/or second order SCI carried on PSSCH.

In some embodiments, the resource for sidelink information includes at least one of the following: the resource on the licensed band; the resource on the dedicated band; or the resource on the unlicensed band.

In the above embodiments, the resource scheduled by the network device for the terminal device to transmit sidelink information includes the resource on the licensed band, the resource on the dedicated band, and/or the resource on the unlicensed band. This allows sidelink communication containing the positioning reference signal to utilize at least one of multiple types of resources, thereby expanding the scope of usage of sidelink positioning resource.

Based on Figure 17, in one embodiment, the network/base station sends first DCI to indicate/schedule the transmission of first sidelink information on the sidelink.

The CRC carried in the first DCI is scrambled with a first RNTI.

The first RNTI includes at least one of the following: positioning RNTI (e.g., SL-POS-RNTI) for dynamic scheduling (dynamic grant) of a sidelink positioning reference signal; positioning configured grant RNTI (e.g., SL-POS-CS-RNTI) for scheduling the configured grant of a sidelink positioning reference signal, sidelink RNTI (e.g., SL-POS-RNTI-1) for scheduling of a sidelink positioning reference signal, PSCCH, and PSSCH.

Due to functional multiplexing, any two or all three of the above three RNTIs are combined into one RNTI.

The first sidelink information includes at least one of the following.

1) Sidelink positioning reference information SL-PRS, including at least the following: PSCCH: for indicating/scheduling SL-PRS on the sidelink; SL-PRS: positioning reference signal.
2) Sidelink positioning reference information SL-PRS and PSSCH, including at least the following: PSCCH: for indicating/scheduling PSSCH and SL-PRS on the sidelink; PSSCH: for carrying sidelink data information; SL-PRS: positioning reference signal.

Optionally, the above PSCCH are two independent PSCCHs, that is, one PSCCH for indicating/scheduling PSSCH and another PSCCH for indicating/scheduling SL-PRS.

The information fields carried in the first DCI includes the following.

Information carried in DCI, including at least one of the following.

1) SL PRS resource ID: sidelink positioning reference signal resource ID.
2) SL PRS comb offset and associated SL PRS comb size: offset and size of the comb of the sidelink positioning reference signal.
3) SL PRS starting OFDM symbol and number of SL PRS OFDM symbols: starting OFDM symbol and number of OFDM symbols for the sidelink positioning reference signal.
The above indication method for the OFDM symbol includes at least one of the following: joint indication: the information field *A* has M bits, used to jointly indicate the starting OFDM symbol and the number of OFDM symbols within a slot; bitmap: the information field *A* has M bits, where each bit corresponds to an OFDM symbol, and each bit indicates whether the corresponding OFDM symbol is occupied or not with a value of 0 or 1.
4) SL PRS frequency domain allocation: frequency-domain resource or frequency-domain resource set for the sidelink positioning reference signal.
The above indication method for the frequency-domain resource (set) includes at least one of the following: joint indication: the information field *B* has K bits, used to jointly indicate the starting subchannel and the number of subchannels; bitmap: the information field *B* has K bits, where each bit corresponds to one subchannel, and each bit indicates whether the corresponding subchannel is occupied or not with a value of 0 or 1.
5) RE offset: resource element offset.

The SCI carries the following information: information fields carried in the DCI, where at least one information field is included in the scheduled SCI.

The SCI includes: first-order SCI carried on the PSCCH; and/or second-order SCI carried on the PSSCH.

Based on Figure 17, in another embodiment, the network/base station transmits second DCI to indicate/schedule the transmission of second sidelink information on the sidelink.

The second DCI may be the existing NR sidelink DCI (e.g., DCI 3_0 or DCI 3_1), and the second DCI may have multiple information fields for indicating the first uplink feedback resource.

The second sidelink information includes at least one of the following.

1) Sidelink positioning reference information SL-PRS, including at least the following: PSCCH: for indicating/scheduling SL-PRS on the sidelink; SL-PRS: positioning reference signal.
2) Sidelink positioning reference information SL-PRS and PSSCH, including at least the following: PSCCH: for indicating/scheduling PSSCH and SL-PRS on the sidelink; PSSCH: for carrying sidelink data information; SL-PRS: positioning reference signal.

Optionally, the above PSCCH are two independent PSCCHs, that is, one PSCCH for indicating/scheduling PSSCH and another PSCCH for indicating/scheduling SL-PRS.

The information fields contained in the second DCI includes the information fields contained in the first DCI above, based on the existing NR sidelink DCI.

When the second sidelink information only includes PSCCH and SL PRS, the information sent by the UE on the first uplink resource includes at least one of the following:

1) Specific content indicated by higher layers for the UE to transmit on the first uplink resource, such as ACK or NACK.

2) If the UE did not send PSCCH/SL PRS on the sidelink resource, the UE sends NACK; if the UE sent PSCCH/SL PRS on the sidelink resource, the UE sends ACK.

3) The UE independently decides the specific content to send on the first uplink resource, such as ACK or NACK.

Based on Figure 17, in the above embodiments, the terminal device preemptively reports to the network device the type of sidelink information it intends to transmit, enabling more precise scheduling by the network device.

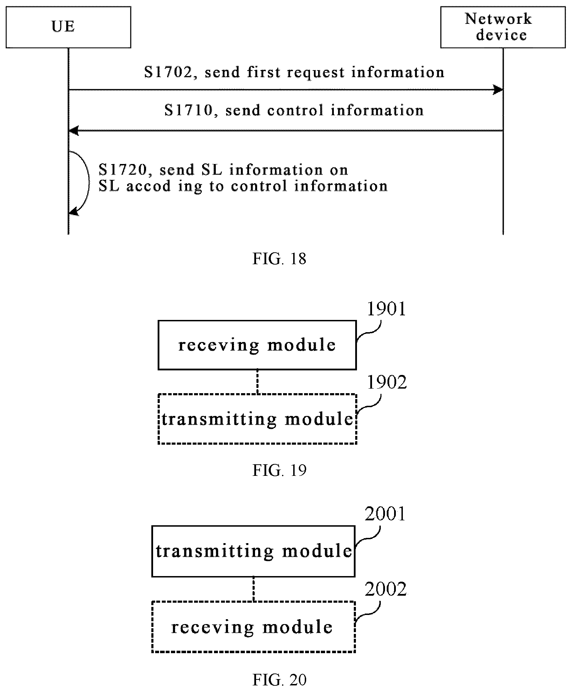

Please refer to Figure 18, which illustrates a flowchart of a method for control information transmission according to an embodiment of the disclosure. This method is interactively executed by a terminal device and a network device. The terminal device can be terminal device 120 or terminal device 130 in the network architecture shown in Figure 1, and the network device can be network device 110 in the network architecture shown in Figure 1. In addition to the steps in Figure 17, the method includes the following step before step 1710.

Step 1702: the terminal device sends first request information, and the network device receives the first request information. The first request information is information sent to the network device, indicating whether the sidelink information includes information transmitted on the PSSCH.

Correspondingly, when the network device executes step 1710, it sends the control information based on the first request information.

That is, the UE sends first request information to the network/base station. The first request information includes at least one of the following: sidelink transmission includes PSCCH and SL PRS; sidelink transmission includes PSCCH, PSSCH, and SL PRS.

In the above embodiments, before the network device sends control information to indicate/schedule the transmission of sidelink information by the terminal device, the network device first receives the first request information sent by the terminal device. The first request information indicates whether the terminal device intends to transmit only SL PRS or both SL PRS and information on the PSSCH. Correspondingly, when the network device sends the control information, it sends corresponding control information based on the indication of the first request information, thereby enabling the network device to perform more precise indication/scheduling and enhancing the accuracy of sidelink information scheduling.

In some embodiments, transmission of the first request information includes: the terminal device sending the first request information when sending a SR) or a BSR.

That is, the first request information is sent to the network device together with the SR or BSR. In the above embodiments, the terminal device sends the first request information to the network device together with the SR or BSR, thereby reusing the existing reporting mechanisms and simplifying the reporting process for the first request information.

In some embodiments, the first request information is included in the SR or BSR; this eliminates the need for additional signaling for the first request information, thereby conserving signaling resources.

Alternatively, the first request information is independent from the SR or BSR; this allows the first request information to be independent of the SR or BSR, without the need to modify the format of the SR or BSR signaling, thereby reducing the complexity of system signaling.

In some embodiments, the transmission of the first request information includes: the terminal device sending the first request information separately from a SR or a BSR.

The transmission process of the first request information is not bounded to the SR or BSR, thereby enhancing the flexibility of reporting the first request information.

For example, the first request information is sent by the terminal device to the network device when a triggering condition is met, or the first request information is sent proactively by the terminal device.

Where the triggering condition includes, for example, the terminal device receiving a positioning request, or the time elapsed since the last transmission of a positioning reference signal reaching a threshold, etc.

The proactive sending by the terminal device refers to the terminal device receiving a higher-layer signaling initiating positioning.

In some embodiments, the DCI format of the control information corresponds to the resource pool where the transmission resource for the sidelink information is located.

In the above embodiments, the network device determines the DCI format of the control information based on the resource pool where the transmission resource for the sidelink information is located, thereby selecting an appropriate DCI format according to the resource pool where the transmission resource for the sidelink information to be transmitted is located, ensuring the rationality of DCI format selection.

Alternatively, the DCI format of the control information may be determined by the network device itself, or it may be set as requested by the terminal device.

In some embodiments, the resource pool where the transmission resource for the sidelink information is located includes: a dedicated resource pool for the positioning reference signal; or a shared resource pool for the positioning reference signal and sidelink communication.

In one embodiment, when the sidelink information does not involve information on the PSSCH, the resource pool of the transmission resource for the sidelink information may be either the dedicated resource pool or the shared resource pool.

In one embodiment, when the sidelink information involves information on the PSSCH, the resource pool of the transmission resource for the sidelink information may be the shared resource pool.

In the above embodiments, a dedicated resource pool is set for the positioning reference signal, and a shared resource pool is set for the positioning reference signal and sidelink communication. Subsequently, the network device flexibly selects the resource pool for sidelink information based on the type of sidelink information the terminal device intends to transmit, thereby enhancing the flexibility of sidelink information scheduling.

In some embodiments, when the transmission resource for the sidelink information is located in the dedicated resource pool, the DCI format of the control information is the first format; when the transmission resource for the sidelink information is located in the shared resource pool, the DCI format of the control information is the first format.

Or, when the transmission resource for the sidelink information is located in the dedicated resource pool, the DCI format of the control information is the first format; when the transmission resource for the sidelink information is located in the shared resource pool, the DCI format of the control information is the second format.

That is, in the above embodiments, when scheduling/indicating the transmission of sidelink information, the network device may use corresponding DCI formats in different resource pools: a) the first resource pool is a dedicated resource pool for SL PRS positioning, corresponding to the use of DCI format 1; b) the second resource pool is a shared resource pool for SL PRS and sidelink communication, corresponding to the use of DCI format 2.

The DCI format 1 and DCI format 2 may be the same or different. For example, for sidelink information transmitted through the shared resource pool, the DCI in the first format may be used, or the DCI in the second format may be used.

In the above embodiments, for sidelink information containing both SL PRS and information on PSSCH, the network device may schedule/indicate resources in the second resource pool using the DCI in the second format. For sidelink information not containing PSSCH information, the network device may schedule resources in the first resource pool using the DCI in the first format, or it may schedule/indicate resources in the second resource pool using the DCI in the second format. This enhances the flexibility of sidelink information resource and DCI format selection.

In some embodiments, when the length of the DCI in the first format is less than the length of the DCI in the second format, and the control information is the DCI in the first format, the control information has padding bits at the end. The length of the padding bits is the difference between the length of the DCI in the first format and the length of the DCI in the second format.

Alternatively, when the length of the DCI in the first format is greater than the length of the DCI in the second format, and the control information is the DCI in the second format, the control information has padding bits at the end. The length of the padding bits is the difference between the length of the DCI in the first format and the length of the DCI in the second format.

In a system that supports scheduling the transmission of sidelink information using the DCI in the first format and the DCI in the second format, the length of the DCI in the first format and the length of the DCI in the second format may differ. If the network device directly transmits the DCI in the first format or the DCI in the second format, the terminal device may need to attempt reception based on different lengths of DCI formats, which would increase the complexity of DCI reception by the terminal device. In this regard, in the above embodiments, the network device may unify the lengths of the two formats of DCI by padding the shorter format of DCI at the end until it matches the length of the other DCI format. In this way, when the terminal device performs DCI reception, it only needs to detect and receive DCI based on one length, thereby simplifying the complexity of DCI reception by the terminal device.

In some embodiments, the padding bits are zero-valued bits. Alternatively, the padding bits have other values, such as a designated value of 1.

In the above embodiments, when the network device transmits DCI, it pads the shorter format of DCI with zeros at the end. Subsequently, after the terminal device receives the DCI, it discards the trailing zero bits to accurately obtain the content of the DCI. This simplifies the complexity of DCI reception while ensuring the accuracy of DCI reception.

In some embodiments, the network device pads the shorter format of DCI with zeros at the end when the terminal device is configured to monitor two formats of DCI.

For example, the handling of DCI bit length may be as follows.

If the UE is configured to monitor DCI in the second format, such as DCI format 3_0, and the bit length of the DCI in the first format is less than that of DCI format 3_0, then zero padding is added to the end of the DCI in the first format to make its length equal to that of DCI format 3_0.

If the UE is configured to monitor DCI in the second format, such as DCI format 3_1, and the bit length of the DCI in the first format is less than that of DCI format 3_1, then zero padding is added to the end of the DCI in the first format to make its length equal to that of DCI format 3_1.

If the UE is configured to monitor DCI in the second format, such as DCI format 3_0, and the bit length of the DCI in the first format is greater than that of DCI format 3_0, then zero padding is added to the end of DCI format 3_0 to make its length equal to that of the DCI in the first format.

If the UE is configured to monitor DCI in the second format, such as DCI format 3_1, and the bit length of the DCI in the first format is greater than that of DCI format 3_1, then zero padding is added to the end of DCI format 3_1 to make its length equal to that of the DCI in the first format.

Alternatively, the padding bits have a value(s) of 1.

Please refer to Figure 19, which illustrates a block diagram of an apparatus for control information transmission according to an embodiment of the disclosure. The apparatus is capable of performing the functions executed by the terminal device in the methods shown in Figures 15, 17, or 18. As shown in Figure 19, the apparatus includes a receiving module 1901, which is configured to receive control information. The control information is for indicating or scheduling the transmission of sidelink information on the sidelink, where the sidelink information includes a positioning reference signal.

In some embodiments, the sidelink information includes: information transmitted on a PSCCH and a reference signal; or information transmitted on a PSCCH, a reference signal, and information transmitted on a PSSCH.

In some embodiments, the control information is DCI in the first format, and the first format is other than DCI formats 3_0 and 3_1; or, the control information is DCI in the second format, and the second format is DCI format 3_0 or DCI format 3_1.

In some embodiments, a CRC of the DCI in the first format is scrambled with a positioning-related RNTI.

In some embodiments, the positioning-related RNTI includes at least one of the following RNTIs: a first RNTI for dynamic scheduling of a sidelink positioning reference signal; a second RNTI for scheduling of a configured grant of a sidelink positioning reference signal; a third RNTI for scheduling of a sidelink positioning reference signal, PSCCH, and PSSCH.

In some embodiments, when the sidelink information does not include the information transmitted on the PSSCH and the control information is the DCI in the first format, the DCI in the first format does not contain information for indicating an uplink feedback resource.

In some embodiments, the DCI in the second format contains an information field for indicating an uplink feedback resource.

In some embodiments, the apparatus also includes: a transmitting module 1902, which is configured to transmit at least one of the following on the uplink feedback resource when the sidelink information does not include the information transmitted on the PSSCH: first information indicated by a higher layer; second information indicating whether the sidelink information has been transmitted; third information determined by the terminal device itself.

In some embodiments, the apparatus also includes: a transmitting module 1902, configured to transmit first request information. The first request information is information sent to the network device, indicating whether the sidelink information includes information transmitted on the PSSCH.

In some embodiments, the transmitting module 1902 is configured to transmit the first request information together with a scheduling request (SR) or a buffer status report (BSR).

In some embodiments, the first request information is contained in the SR or BSR; or, the first request information is independent of SR or BSR.

In some embodiments, the DCI format of the control information corresponds to the resource pool where the transmission resource for the sidelink information is located.

In some embodiments, the resource pool where the transmission resource for the sidelink information is located includes: a dedicated resource pool for the positioning reference signal; or a shared resource pool for both the positioning reference signal and sidelink communication.

In some embodiments, when the transmission resource for the sidelink information is located in the dedicated resource pool, the DCI format of the control information is the first format; when the transmission resource for the sidelink information is located in the shared resource pool, the DCI format of the control information is the first format.

Or, when the transmission resource for the sidelink information is located in the dedicated resource pool, the DCI format of the control information is the first format; when the transmission resource for the sidelink information is located in the shared resource pool, the DCI format of the control information is the second format.

In some embodiments, when the length of the DCI in the first format is less than the length of the DCI in the second format, and the control information is the DCI in the first format, the control information has padding bits at the end. The length of the padding bits is the difference between the length of the DCI in the first format and the length of the DCI in the second format.

Or, when the length of the DCI in the first format is greater than the length of the DCI in the second format, and the control information is the DCI in the second format, the control information has padding bits at the end. The length of the padding bits is the difference between the length of the DCI in the first format and the length of the DCI in the second format.

In some embodiments, the padding bits are zero-valued bits.

In some embodiments, the control information is for indicating the resource or resource set for the reference signal.

In some embodiments, the information field of the control information includes at least one of the following information fields: a first information field for carrying a resource identifier of the reference signal; a second information field for carrying the offset and size of a comb of the reference signal; a third information field for carrying time-domain resource indication information of the reference signal; a fourth information field for carrying frequency-domain resource indication information of the reference signal; a fifth information field for carrying the resource element (RE) offset of the reference signal.

In some embodiments, the time-domain resource indication information of the reference signal includes at least one of the following: a starting OFDM symbol of the reference signal; the number of OFDM symbols occupied by the reference signal.

In some embodiments, the frequency-domain resource indication information of the reference signal includes at least one of the following: a frequency-domain resource for the reference signal; a frequency-domain resource set for the reference signal.

In some embodiments, the apparatus also includes a transmitting module, which is configured to send sidelink control information (SCI), which includes at least one of the first, second, third, fourth, and fifth information fields.

In some embodiments, the SCI includes at least one of the following: first-order SCI carried on the PSCCH; second-order SCI carried on the PSSCH.

In some embodiments, the resource for sidelink information includes at least one of the following: a resource on a licensed band; a resource on a dedicated band; and a resource on an unlicensed band.

Please refer to Figure 20, which illustrates a block diagram of an apparatus for control information transmission according to an embodiment of the disclosure. The apparatus is capable of performing the functions executed by the network device in the methods shown in Figures 16, 17, or 18. As shown in Figure 20, the apparatus includes a transmitting module 2001, which is configured to transmit control information. The control information is for indicating or scheduling the transmission of sidelink information on a sidelink by a terminal device, the sidelink information includes a positioning reference signal.

In some embodiments, the sidelink information includes: information transmitted on the PSCCH and the reference signal; or, information transmitted on the PSCCH, the reference signal, and information transmitted on the PSSCH.

In some embodiments, the control information is DCI in the first format, and the first format is other than DCI formats 3_0 and 3_1; or, the control information is DCI in the second format, and the second format is DCI format 3_0 or DCI format 3_1.

In some embodiments, the CRC of the DCI in the first format is scrambled with a positioning-related RNTI.

In some embodiments, the positioning-related RNTI includes at least one of the following RNTIs: a first RNTI for dynamic scheduling of a sidelink positioning reference signal; a second RNTI for scheduling of a configured grant of a sidelink positioning reference signal; a third RNTI for scheduling of sidelink positioning reference signal, PSCCH, and PSSCH.

In some embodiments, when the sidelink information does not include the information transmitted on the PSSCH and the control information is the DCI in the first format, the DCI in the first format does not contain an information field for indicating an uplink feedback resource.

In some embodiments, the DCI in the second format contains an information field for indicating the uplink feedback resource.

In some embodiments, the apparatus also includes a receiving module 2002, which is configured to receive at least one of the following on the uplink feedback resource when the sidelink information does not include information transmitted on the PSSCH: first information indicated by a higher layer to the terminal device; second information indicating whether the terminal device has transmitted the sidelink information; third information determined by the terminal device itself.

In some embodiments, the apparatus also includes a receiving module 2002, which is configured to receive a first request information. The first request information is sent by the terminal device, indicating whether the sidelink information includes information transmitted on the PSSCH.

Transmission of the control information includes: transmitting the control information based on the first request information.

In some embodiments, the receiving module 2002 is configured to receive the first request information together with a SR or a BSR.

In some embodiments, the first request information is contained in the SR or BSR; or, the first request information is independent of SR or BSR.

In some embodiments, the DCI format of the control information corresponds to the resource pool where the transmission resource for the sidelink information is located.

In some embodiments, the resource pool where a transmission resource for the sidelink information is located includes: a dedicated resource pool for the positioning reference signal; or a shared resource pool for both the positioning reference signal and sidelink communication.

In some embodiments, when the transmission resource for the sidelink information is located in the dedicated resource pool, the DCI format of the control information is the first format; when the transmission resource for the sidelink information is located in the shared resource pool, the DCI format of the control information is the first format.

Or, when the transmission resource for the sidelink information is located in the dedicated resource pool, the DCI format of the control information is the first format; when the transmission resource for the sidelink information is located in the shared resource pool, the DCI format of the control information is the second format.

In some embodiments, when the length of the DCI in the first format is less than the length of the DCI in the second format, and the control information is the DCI in the first format, the control information has padding bits at the end. The length of the padding bits is the difference between the length of the DCI in the first format and the length of the DCI in the second format.

Or, when the length of the DCI in the first format is greater than the length of the DCI in the second format, and the control information is the DCI in the second format, the control information has padding bits at the end. The length of the padding bits is the difference between the length of the DCI in the first format and the length of the DCI in the second format.

In some embodiments, the padding bits are zero-valued bits.

In some embodiments, the control information is for indicating the resource or resource set for the reference signal.

In some embodiments, the information field of the control information includes at least one of the following information fields: a first information field for carrying a resource identifier of the reference signal; a second information field for carrying the offset and size of a comb of the reference signal; a third information field for carrying time-domain resource indication information of the reference signal; a fourth information field for carrying frequency-domain resource indication information of the reference signal; a fifth information field for carrying the resource element (RE) offset of the reference signal.

In some embodiments, the time-domain resource indication information of the reference signal includes at least one of the following: a starting OFDM symbol of the reference signal; the number of OFDM symbols occupied by the reference signal.

In some embodiments, the frequency-domain resource indication information of the reference signal includes at least one of the following: a frequency-domain resource for the reference signal; a frequency-domain resource set for the reference signal.

In some embodiments, the resource for sidelink information includes at least one of the following: a resource on a licensed band; a resource on a dedicated band; or a resource on an unlicensed band.

It should be noted that in the above embodiments, the device is divided into different functional modules to implement its functions. In practice, the functions described above can be allocated to different functional modules according to actual needs, that is, the internal structure of the device can be divided into different functional modules to complete all or part of the functions described above.

Regarding the device in the above embodiments, the specific manner in which each module performs operations has been described in detail in the embodiments related to the method, and thus will not be described in detail here.

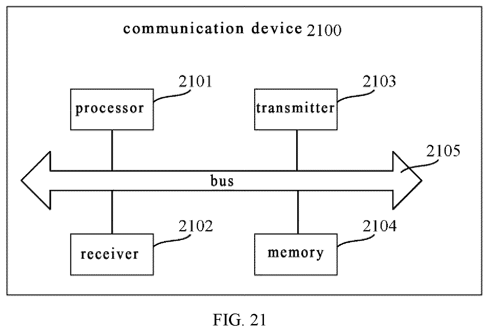

Please refer to Figure 21, which illustrates a structural diagram of a communication device 2100 according to an embodiment of the disclosure. The communication device 2100 includes: a processor 2101, a receiver 2102, a transmitter 2103, a memory 2104, and a bus 2105.

The processor 2101 includes one or more processing cores, and the processor 2101 can execute various functional applications and information processing by running software programs and modules.

The receiver 2102 and transmitter 2103 may be implemented as a single communication component, which may be a communication chip. This communication chip may also be referred to as a transceiver. The memory 2104 is connected to the processor 2101 through the bus 2105. The memory 2104 is configured to store computer programs, and the processor 2101 executes these computer programs to implement the steps of the methods described in the embodiments above.

Furthermore, the memory 2104 may be implemented by any type of volatile or nonvolatile storage device or a combination thereof, including but not limited to: magnetic disks or optical discs, electrically erasable programmable read-only memory, erasable programmable read-only memory, static random access memory, read-only memory, magnetic storage, flash memory, programmable read-only memory.

In an exemplary embodiment, when the communication device 2100 is implemented as the terminal device described above, the receiver 2102 and processor 2101 can execute the computer program to enable the communication device to perform the steps executed by the terminal device in the methods shown in Figures 15, 17, or 18. At this time, the receiver 2102 corresponds to the receiving module 1901 shown in Figure 19, and the transmitter 2103 corresponds to the transmitting module 1902 shown in Figure 19.

In an exemplary embodiment, when the communication device 2100 is implemented as the network device described above, the transmitter 2103 executes the computer program to enable the communication device to perform the steps executed by the network device in the methods shown in Figures 16, 17, or 18. At this time, the transmitter 2103 corresponds to the transmitting module 2001 shown in Figure 20, and the receiver 2102 corresponds to the receiving module 2002 shown in Figure 20.

The disclosure also provides a computer-readable storage medium, which stores a computer program. When executed by a processor, the computer program enables a communication device to perform all or part of the steps executed by the terminal device or network device in the methods shown in Figures 15, 16, 17, or 18.

The disclosure also provides a chip, which is used to run in a communication device to enable the communication device to perform all or part of the steps executed by the terminal device or network device in the methods shown in Figures 15, 16, 17, or 18.

The disclosure also provides a computer program product, which includes computer instructions stored in a computer-readable storage medium. When the computer instructions are read and executed by a processor of a communication device, the communication device performs all or part of the steps executed by the terminal device or network device in the methods shown in Figures 15, 16, 17, or 18.

The disclosure also provides a computer program, which, when executed by a processor of a communication device, enables the communication device to perform all or part of the steps executed by the terminal device or network device in the methods shown in Figures 15, 16, 17, or 18.

It should be noted that in the above one or more examples, the functions described in the embodiments of the disclosure may be implemented using hardware, software, firmware, or any combination thereof. When implemented in software, these functions may be stored in a computer-readable medium or transmitted as one or more instructions or code in a computer-readable medium. A computer-readable medium includes a computer storage medium and a communication medium, where the communication medium includes any medium that facilitates the transfer of a computer program from one place to another. Storage media may be any available media that can be accessed by a general or dedicated computer.

The above description is merely illustrative of the embodiments of the disclosure and is not intended to limit the scope of the disclosure. Any modifications, equivalent substitutions, improvements, etc., made within the spirit and principles of the disclosure are intended to be included within the scope of protection of the disclosure.

**Claims**

1. A method control information transmission, performed by a terminal device and comprising:
   receiving control information, wherein the control information is for indicating or scheduling transmission of sidelink information on a sidelink, and the sidelink information comprises a positioning reference signal.

2. The method according to claim 1, wherein the sidelink information comprises:

   information transmitted on a physical sidelink control channel (PSCCH) and the reference signal; or
   information transmitted on the PSCCH, the reference signal, and information transmitted on a physical sidelink shared channel (PSSCH).

3. The method according to claim 1 or 2, wherein:

   the control information is downlink control information (DCI) in a first format, and the first format is other than DCI format 3_0 and DCI format 3_1; or
   the control information is DCI in a second format, and the second format is DCI format 3_0 or DCI format 3_1.

4. The method according to claim 3, wherein a cyclic redundancy check (CRC) of the DCI in the first format is scrambled with a positioning-related radio network temporary identifier (RNTI).

**5.** The method according to claim 4, wherein the positioning-related RNTI comprises at least one of the following RNTIs:

a first RNTI for dynamic scheduling of a sidelink positioning reference signal;
a second RNTI for scheduling of a configured grant of a sidelink positioning reference signal; and;
a third RNTI for scheduling of a sidelink positioning reference signal, a PSCCH, and a PSSCH.

**6.** The method according to any of claims 3 to 5, wherein in the case where the sidelink information does not comprise the information transmitted on a PSSCH and the control information is the DCI in the first format, the DCI in the first format does not comprise information indicating an uplink feedback resource.

**7.** The method according to any of claims 3 to 5, wherein the DCI in the second format comprises an information field indicating an uplink feedback resource.

**8.** The method according to claim 7, further comprising:
in the case where the sidelink information does not comprise the information transmitted on a PSSCH, transmitting at least one of the following information on the uplink feedback resource:

first information indicated by a higher layer;
second information indicating whether the sidelink information has been transmitted; or
third information determined by the terminal device itself.

**9.** The method according to any of claims 2 to 8, further comprising:
transmitting first request information, wherein the first request information is sent to a network device and indicates whether the sidelink information comprises the information transmitted on a PSSCH.

**10.** The method according to claim 9, wherein transmitting the first request information comprises:
transmitting the first request information together with a scheduling request (SR) or a buffer status report (BSR).

**11.** The method according to claim 10, wherein

the first request information is contained in the SR or BSR; or
the first request information is independent of the SR or BSR.

**12.** The method according to any of claims 3 to 11, wherein the DCI format of the control information corresponds to a resource pool where a transmission resource for the sidelink information is located.

**13.** The method according to claim 12, wherein the resource pool where the transmission resource for the sidelink information is located comprises one of:

a dedicated resource pool for the positioning reference signal; or
a shared resource pool for both the positioning reference signal and sidelink communication.

**14.** The method according to claim 13, wherein

in the case where the resource pool where the transmission resource for the sidelink information is located is the dedicated resource pool, the DCI format of the control information is the first format; and in the case where the resource pool where the transmission resource for the sidelink information is located is the shared resource pool, the DCI format of the control information is the first format; or
in the case where the resource pool where the transmission resource for the sidelink information is located is the dedicated resource pool, the DCI format of the control information is the first format; and in the case where the resource pool where the transmission resource for the sidelink information is located is the shared resource pool, the DCI format of the control information is the second format.

**15.** The method according to any of claims 3 to 14, wherein

in the case where the length of the DCI in the first format is less than that of the DCI in the second format, and the control information is the DCI in the first format, an end of the control information has padding information, and the length of the padding information is equal to the difference in length between the DCI in the first format and the DCI in the second format; or

in the case where the length of the DCI in the first format is greater than that of the DCI in the second format, and the control information is the DCI in the second format, the end of the control information has padding information, and the length of the padding information is equal to the difference in length between the DCI in the first format and the DCI in the second format.

16. The method according to claim 15, wherein the padding information is a bit with a value of zero.

17. The method according to any of claims 1 to 16, wherein the control information is for indicating a resource or resource set for the reference signal.

18. The method according to claim 17, wherein an information field of the control information comprise at least one of the following information fields:

a first information field for carrying a resource identifier of the reference signal;
a second information field for carrying an offset and size of a comb of the reference signal;
a third information field for carrying time-domain resource indication information of the reference signal;
a fourth information field for carrying frequency-domain resource indication information of the reference signal; and
a fifth information field for carrying a resource element (RE) offset of the reference signal.

19. The method according to claim 18, wherein the time-domain resource indication information of the reference signal comprises at least one of the following:

a starting orthogonal frequency division multiplexing (OFDM) symbol of the reference signal; or
a number of OFDM symbols of the reference signal.

20. The method according to claim 18 or 19, wherein the frequency-domain resource indication information of the reference signal comprises at least one of the following:

a frequency-domain resource for the reference signal; or
a frequency-domain resource set for the reference signal.

21. The method according to any of claims 18 to 20, further comprising:
transmitting sidelink control information (SCI), wherein the SCI comprises at least one of the first information field, the second information field, the third information field, the fourth information field, and the fifth information field.

22. The method according to claim 21, wherein the SCI comprises one of:

first-order SCI carried on a PSCCH; or
second-order SCI carried on a PSSCH.

23. The method according to any of claims 1 to 22, wherein a resource for the sidelink information comprises at least one of the following resources:

a resource on a licensed band;
a resource on dedicated band; or
a resource on an unlicensed band.

24. A method for control information transmission, performed by a network device and comprising:
transmitting control information, wherein the control information is for indicating or scheduling transmission of sidelink information on a sidelink by a terminal device, and the sidelink information comprises a positioning reference signal.

25. The method according to claim 24, wherein the sidelink information comprises:

information transmitted on a physical sidelink control channel (PSCCH) and the reference signal; or
information transmitted on the PSCCH, the reference signal, and information transmitted on a physical sidelink shared channel (PSSCH).

26. The method according to claim 24 or 25, wherein:

the control information is downlink control information (DCI) in a first format, and the first format is other than DCI format 3_0 and DCI format 3_1; or
the control information is DCI in a second format, and the second format is DCI format 3_0 or DCI format 3_1.

27. The method according to claim 26, wherein a cyclic redundancy check (CRC) of the DCI in the first format is scrambled with a positioning-related radio network temporary identifier (RNTI).

28. The method according to claim 27, wherein the Positioning-related RNTI comprises at least one of the following RNTIs:

a first RNTI for dynamic scheduling of a sidelink positioning reference signal;
a second RNTI for scheduling of a configured grant of a sidelink positioning reference signal; and;
a third RNTI for scheduling of a sidelink positioning reference signal, a PSCCH, and a PSSCH.

29. The method according to any of claims 26 to 28, wherein in the case where the sidelink information does not comprise information transmitted on a PSSCH and the control information is the DCI in the first format, the DCI in the first format does not comprise an information field indicating an uplink feedback resource.

30. The method according to any of claims 26 to 28, wherein the DCI in the second format comprises an information field indicating an uplink feedback resource.

31. The method according to claim 30, further comprising:
in the case where the sidelink information does not comprise the information transmitted on a PSSCH, receiving at least one of the following information on the uplink feedback resource:

first information indicated by a higher layer;
second information indicating whether the sidelink information has been transmitted; or
third information determined by the terminal device itself.

32. The method according to any of claims 25 to 31, further comprising:

receiving first request information, wherein the first request information is transmitted by the terminal device and indicates whether the sidelink information comprises the information transmitted on a PSSCH; and
transmitting the control information comprises:
transmitting the control information based on the first request information.

33. The method according to claim 32, wherein receiving the first request information comprises:
receiving the first request information together with a scheduling request (SR) or a buffer status report (BSR).

34. The method according to claim 33, wherein:

the first request information is contained in the SR or BSR; or
the first request information is independent of the SR or BSR.

35. The method according to any of claims 26 to 34, wherein the DCI format of the control information corresponds to a resource pool where a transmission resource for the sidelink information is located.

36. The method according to claim 35, wherein the resource pool where the transmission resource for the sidelink information is located comprises one of:

a dedicated resource pool for the positioning reference signal; or
a shared resource pool for both the positioning reference signal and sidelink communication.

37. The method according to claim 36, wherein

in the case where the resource pool where the transmission resource for the sidelink information is located is the dedicated resource pool, the DCI format of the control information is the first format; and in the case where the resource pool where the transmission resource for the sidelink information is located is the shared resource pool, the DCI format of the control information is the first format; or

in the case where the resource pool where the transmission resource for the sidelink information is located is the dedicated resource pool, the DCI format of the control information is the first format; and in the case where the resource pool where the transmission resource for the sidelink information is located is the shared resource pool, the DCI format of the control information is the second format.

38. The method according to any of claims 26 to 37, wherein:

in the case where the length of the DCI in the first format is less than that of the DCI in the second format, and the control information is the DCI in the first format, the end of the control information has padding information, and the length of the padding information is equal to the difference in length between the DCI in the first format and the DCI in the second format; or

in the case where the length of the DCI in the first format is greater than that of the DCI in the second format, and the control information is the DCI in the second format, the end of the control information has padding information, and the length of the padding information is equal to the difference in length between the DCI in the first format and the DCI in the second format.

39. The method according to claim 38, wherein the padding information is a bit with a value of zero.

40. The method according to any of claims 24 to 39, wherein the control information is for indicating a resource or resource set for the reference signal.

41. The method according to claim 40, wherein an information field of the control information comprise at least one of the following information fields:

a first information field for carrying a resource identifier of the reference signal;
a second information field for carrying an offset and size of a comb of the reference signal;
a third information field for carrying time-domain resource indication information of the reference signal;
a fourth information field for carrying frequency-domain resource indication information of the reference signal; and
a fifth information field for carrying a resource element (RE) offset of the reference signal.

42. The method according to claim 41, wherein the time-domain resource indication information of the reference signal comprises at least one of the following:

a starting orthogonal frequency division multiplexing (OFDM) symbol of the reference signal; or
a number of OFDM symbols of the reference signal.

43. The method according to claim 41 or 42, wherein the frequency-domain resource indication information of the reference signal comprises at least one of the following:

a frequency-domain resource for the reference signal; or
a frequency-domain resource set for the reference signal.

44. The method according to any of claims 24 to 43, wherein a resource for the sidelink information comprises at least one of the following resources:

a resource on a licensed band;
a resource on dedicated band; or
a resource on an unlicensed band.

45. An apparatus for control information transmission, comprising:
a receiving module configured to receive control information, wherein the control information is for indicating or scheduling transmission of sidelink information on a sidelink, and the sidelink information comprises a positioning reference signal.

46. An apparatus for control information transmission, comprising:
a transmitting module configured to transmit control information, wherein the control information is for indicating or scheduling transmission of sidelink information on a sidelink by a terminal device, and the sidelink information comprises a positioning reference signal.

47. A terminal device, comprising a processor, a memory, and a transceiver, wherein
the memory is configured to store a computer program, and the processor is configured to execute the computer program to cause the terminal device to perform the method for control information transmission according to any of claims 1 to 23.

48. A network device, comprising a processor, a memory, and a transceiver, wherein
the memory is configured to store a computer program, and the processor is configured to execute the computer program to cause the terminal device to perform the method for control information transmission according to any of claims 24 to 44.

49. A computer-readable storage medium, wherein the storage medium stores a computer program, and the computer program is to be executed by a processor of a communication device to cause the communication device to perform the method for control information transmission according to any of claims 1 to 44.

50. A chip, comprising an integrated circuit and an application program, wherein the chip is configured to operate in a communication device to cause the communication device to perform the method for control information transmission according to any of claims 1 to 44.

51. A computer program product, comprising computer instructions stored in a computer-readable storage medium; and a processor of a communication device is configured to read and execute the computer instructions from the storage medium to cause the communication device to perform the method of control information transmission according to any of claims 1 to 44.

52. A computer program, executed by a processor of a communication device to cause the communication device to perform the method of control information transmission according to any of claims 1 to 44.

FIG. 1

FIG. 2

FIG. 3

SL COMMUNICATION

FIG. 4

UE1

RESOURCE ALLOCATION

RESOURCE ALLOCATION

UE2

UE3

SL COMMUNICATION

FIG. 5

UE1

DATA

UE2

FIG. 6

GROUP

UE2

UE1

UE3

UE4

FIG. 7

UE2

UE6

UE3

**UE1**

UE5

UE4

FIG. 8

| AGC | | | | | PSSCH | | | | | | | | GP |
|---|---|---|---|---|---|---|---|---|---|---|---|---|---|
| | | PSCCH | | | | | | | | | | | |

(a)

| AGC | | | | | PSSCH | | | | | | GP | PSFCH | GP |
|---|---|---|---|---|---|---|---|---|---|---|---|---|---|
| | | PSCCH | | | | | | | | | | | |

(b)

FIG. 9

FIG. 10

FIG. 11

|         | Symbol#1            | Symbol#2            | Symbol#3            |
|---------|---------------------|---------------------|---------------------|
| RE#11   |                     |                     |                     |
| RE#10   |                     |                     |                     |
| RE#9    | Reference signal    | Reference signal    | Reference signal    |
| RE#8    |                     |                     |                     |
| RE#7    |                     |                     |                     |
| RE#6    |                     |                     |                     |
| RE#5    | Reference signal    | Reference signal    | Reference signal    |
| RE#4    |                     |                     |                     |
| RE#3    |                     |                     |                     |
| RE#2    |                     |                     |                     |
| RE#1    | Reference signal    | Reference signal    | Reference signal    |
| RE#0    |                     |                     |                     |

FIG. 12

| 0 | 1 | 2 | 3 | 4 | 5 | 6 | 7 | 8 | 9 | 10 | 11 | 12 | 13 |
|---|---|---|---|---|---|---|---|---|---|----|----|----|----|
| AGC | DMRS / PSCCH | | | DMRS | | | DMRS | | | DMRS | | | GP |

FIG. 13

| RE#0 | RE#1 | RE#2 | RE#3 | RE#4 | RE#5 | RE#6 | RE#7 | RE#8 | RE#9 | RE#10 | RE#11 |

Port0/Port1   Port0/Port1   Port0/Port1   Port0/Port1   Port0/Port1   Port0/Port1

FIG. 14

1501

receive control information, the control information is for indicating or scheduling transmission of sidelink information on sidelink, and the sidelink information includes a positioning reference signal

FIG. 15

1601

transmit control information, the control information is for indicating or scheduling transmission of sidelink information on sidelink by terminal device, and the sidelink information includes a positioning reference signal

FIG. 16

| UE | Network device |

S1710, send control information

S1720, send SL information on SL accoding to control information

FIG. 17

UE

Network device

S1702, send first request information

S1710, send control information

S1720, send SL information on
SL accod ing to control information

FIG. 18

receving module 1901

transmitting module 1902

FIG. 19

transmitting module 2001

receving module 2002

FIG. 20

communication device 2100

| | |
|---|---|
| processor 2101 | transmitter 2103 |

bus 2105

| | |
|---|---|
| receiver 2102 | memory 2104 |

FIG. 21

## INTERNATIONAL SEARCH REPORT

| International application No. |
| --- |
| **PCT/CN2023/094031** |

| A. | CLASSIFICATION OF SUBJECT MATTER |
| --- | --- |
| | H04W 72/25(2023.01)i |

According to International Patent Classification (IPC) or to both national classification and IPC

| B. | FIELDS SEARCHED |
| --- | --- |

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

3GPP, CNTXT, ENTXTC, VEN, CJFD: 侧, 旁, 直连, 直接, 链路, 通路, 下行控制信息, 定位, 参考, side, direct, link, sidlink, SL, path, downlink control information, DCI, location, reference, PRS, PSCCH, PSSCH, RNTI

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2023065290 A1 (ZTE CORP.) 27 April 2023 (2023-04-27) description, page 19, line 1-page 43, line 9, and figures 2-19 | 1-52 |
| X | ZTE. "R1-2300804: Discussion on resource allocation for SL positioning reference signal" *3GPP TSG RAN WG1 #112*, 03 March 2023 (2023-03-03), chapter 2 | 1-52 |
| X | CN 115706627 A (CITIC KEZHILIAN TECHNOLOGY CO., LTD.) 17 February 2023 (2023-02-17) description, paragraphs [0285]-[0591], and figures 1 and 13 | 1-52 |
| A | WO 2023023946 A1 (GUANGDONG OPPO MOBILE TELECOMMUNICATIONS CORP., LTD.) 02 March 2023 (2023-03-02) entire document | 1-52 |

| ☐ Further documents are listed in the continuation of Box C. | ☑ See patent family annex. |
| --- | --- |

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **05 December 2023** | **11 December 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/094031**

| Patent document cited in search report | | | Publication date (day/month/year) | Patent family member(s) | | | Publication date (day/month/year) |
|---|---|---|---|---|---|---|---|
| WO | 2023065290 | A1 | 27 April 2023 | None | | | |
| CN | 115706627 | A | 17 February 2023 | WO | 2023011347 | A1 | 09 February 2023 |
| WO | 2023023946 | A1 | 02 March 2023 | None | | | |

Form PCT/ISA/210 (patent family annex) (July 2022)